(19) Europäisches Patentamt / European Patent Office / Office européen des brevets

(11) EP 4 641 702 A1

(12) EUROPEAN PATENT APPLICATION
published in accordance with Art. 153(4) EPC

(43) Date of publication:
**29.10.2025 Bulletin 2025/44**

(21) Application number: **23933349.5**

(22) Date of filing: **17.04.2023**

(51) International Patent Classification (IPC):
***H01M 4/62*** *(2006.01)* ***H01M 50/40*** *(2021.01)*
***H01M 4/13*** *(2010.01)*

(52) Cooperative Patent Classification (CPC):
Y02E 60/10

(86) International application number:
**PCT/CN2023/088797**

(87) International publication number:
**WO 2024/216469 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **JIN, Haizu**
  **Ningde, Fujian 352100 (CN)**
- **XU, Hu**
  **Ningde, Fujian 352100 (CN)**
- **LI, Baiqing**
  **Ningde, Fujian 352100 (CN)**
- **ZHAO, Fenggang**
  **Ningde, Fujian 352100 (CN)**

(74) Representative: **Gong, Jinping**
**CocreateIP**
**Neumarkter Straße 21**
**81673 München (DE)**

# (54) BATTERY CELL, BATTERY, AND ELECTRIC DEVICE

(57) A battery cell, a battery, and an electric apparatus. The battery cell comprises an electrode assembly and an electrolyte; the electrode assembly comprises a first electrode plate, a second electrode plate, and a separator; the first electrode plate and the second electrode plate have opposite polarities; the separator is arranged between the first electrode plate and the second electrode plate; at least one of the first electrode plate, the second electrode plate, and the separator comprises a lyophilic polymer; the battery cell satisfies the following formula:

$$0.01\% \leq \frac{y}{(p1*v1+p2*v2+p3*v3)} \leq 23\%.$$

wherein p1 represents a porosity of the first electrode plate; v1 represents a total volume of the first electrode plate, with a unit of $\mu m^3$; p2 represents a porosity of the second electrode plate; v2 represents a total volume of the second electrode plate, with a unit of $\mu m^3$; p3 represents a porosity of the separator; v3 represents a total volume of the separator, with a unit of $\mu m^3$; and y represents mass of a free electrolyte solution in the battery cell, with a unit of g.

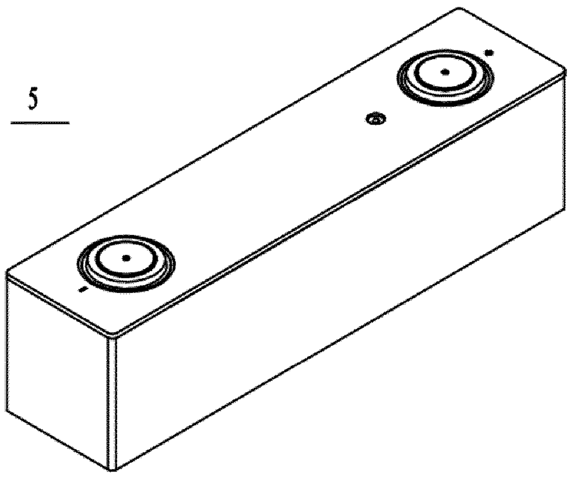


FIG. 1



Processed by Luminess, 75001 PARIS (FR)

## Description

### TECHNICAL FIELD

The present application relates to the field of batteries, in particular to a battery cell, a battery and an electrical apparatus.

### BACKGROUND

Because of characteristics of a high capacity, a long service life and the like, battery cells are widely used in electronic devices, such as mobile phones, laptops, electromobiles, electric cars, electric airplanes, electric ships, electric toy cars, electric toy ships, electric toy airplanes, and electric tools.

As the application range of batteries becomes more and more extensive, the requirements on the performance of the battery cells are becoming increasingly stringent. In order to improve the performance of the battery cell, use reliability and cycle performance of the battery cell are usually still poor.

### SUMMARY OF THE INVENTION

The present application is conducted in view of the above issues, and aims to provide a battery cell, a battery and an electrical apparatus.

A first aspect of the present application provides a battery cell. The battery cell includes an electrode assembly and an electrolyte, the electrode assembly includes a first electrode plate, a second electrode plate, and a separator, the first electrode plate and the second electrode plate have opposite polarities, the separator is disposed between the first electrode plate and the second electrode plate, at least one of the first electrode plate, the second electrode plate, and the separator includes a lyophilic polymer, and the battery cell satisfies the following formula:

$$0 \leq \frac{y}{(p1*v1+p2*v2+p3*v3)} \leq 23\%;$$

and

- p1 represents a porosity of the first electrode plate;
- v1 represents a total volume of the first electrode plate, with a unit of $\mu m^3$;
- p2 represents a porosity of the second electrode plate;
- v2 represents a total volume of the second electrode plate, with a unit of $\mu m^3$;
- p3 represents a porosity of the separator;
- v3 represents a total volume of the separator, with a unit of $\mu m^3$; and
- y represents mass of a free electrolyte solution in the battery cell, with a unit of g.

Therefore, when the embodiments of the present application meet the above formula range, the lyophilic polymer and an electrolyte solution have good affinity, the electrolyte solution can be rapidly diffused between molecular chains of the lyophilic polymer, and be wrapped by the molecular chains, after swelling and adsorption, an elastic porous slow-release electrolyte is obtained, and the slow-release electrolyte can absorb the free electrolyte solution in the battery cell, and reduce the presence of the free electrolyte solution. Because the free electrolyte solution is locked, a risk of extrusion of the free electrolyte solution is reduced, thereby reducing a risk of short circuit of a positive electrode plate and a negative electrode plate caused by dendrite formation, and improving the use reliability and cycle performance of the battery cell. Further, the absorbed free electrolyte solution and the elastic porous slow-release electrolyte form a new condensed electrolyte, which can ensure that the electrolyte has a higher conductivity, thereby improving electrical performance of the battery cell.

In some embodiments, the battery cell satisfies the following formula:

$$0.01\% \leq \frac{y}{(p1*v1+p2*v2+p3*v3)} \leq 20\%;$$

and optionally,

$$0.05\% \leq \frac{y}{(p1*v1+p2*v2+p3*v3)} \leq 15\%.$$

Therefore, in the case of the above formula in the embodiments of the present application, both the use reliability and the cycle performance of the battery cell can be further improved.

In some embodiments, the battery cell further satisfies the following formula:

$$100\% \leq \frac{y+m_1-m_2}{(p1*v1+p2*v2+p3*v3)} \leq 200\%;$$

optionally,

$$120\% \leq \frac{y+m_1-m_2}{(p1*v1+p2*v2+p3*v3)} \leq 160\%;$$

further optionally,

$$130\% \leq \frac{y+m_1-m_2}{(p1*v1+p2*v2+p3*v3)} \leq 140\%;$$

$m_1$ represents mass of the electrode assembly before drying, with a unit of g; and
$m_2$ represents mass of the electrode assembly after drying, with a unit of g.

Therefore, in the case of the above formula in the embodiments of the present application, both the use reliability and the cycle performance of the battery cell can be further improved.

In some embodiments, the amount of a free electrolyte solution per unit capacity of the battery cell is b, with a unit of mg/Ah, and $0\leq b\leq 1400$; optionally, $0.1\leq b\leq 1000$; and further optionally, $0.3\leq b\leq 800$.

Therefore, in the case of the above formula in the embodiments of the present application, both the use reliability and the cycle performance of the battery cell can be further improved.

In some embodiments, the first electrode plate includes a current collector and an active material layer disposed on at least one surface of the current collector, and the active material layer includes a lyophilic polymer and active material particles; the lyophilic polymer is distributed on surfaces of the active material particles; and/or a plurality of active material particles are provided, a pore exists between every two adjacent active material particles, and the lyophilic polymer is distributed at the pore between the active material particles.

Therefore, in the embodiments of the present application, the lyophilic polymer is disposed on the first electrode plate, which can improve the liquid retaining capability of the first electrode plate, and further improve the use reliability and cycle performance of the battery cell.

In some embodiments, the separator includes a substrate and a coating disposed on at least one surface of the substrate; the lyophilic polymer is distributed at pores of the substrate; and/or the lyophilic polymer is distributed in the coating; and/or the lyophilic polymer is disposed on a surface of the coating facing away from the substrate.

Therefore, in the embodiments of the present application, the lyophilic polymer is disposed on the separator, which can improve the liquid retaining capability of the separator, and further improve the use reliability and cycle performance of the battery cell.

In some embodiments, the lyophilic polymer includes a fluorinated polymer; crystallinity of the fluorinated polymer measured by differential scanning calorimetry is $Xc_1$, $0<Xci\leq 30\%$; and a melting temperature of the fluorinated polymer is $T_{m1}$, with a unit of °C, and $0<T_{m1}\leq 140$.

In some embodiments, a glass transition temperature of the fluorinated polymer is $T_{g1}$, with a unit of °C, and $-150\leq T_{g1}\leq 60$.

In some embodiments, the fluorinated polymer includes at least one of a structural unit represented by formula (AI) to a structural unit represented by formula (AIII),

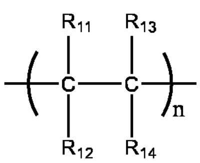 Formula (AI), 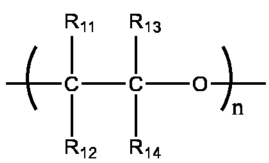 Formula (AII)

in formula (AI) and formula (AII), $R_{11}$, $R_{12}$, $R_{13}$ and $R_{14}$ each independently comprises a hydrogen atom, a fluorine atom, a chlorine atom, substituted or unsubstituted C1-C3 alkyl, or substituted or unsubstituted C1-C3 alkoxy, and at least one of $R_{11}$, $R_{12}$, $R_{13}$ and $R_{14}$ comprises a fluorine atom; when substituted, substituents include one or more of a nitrile group (-CN), a nitro group, a sulfonic group, sulfonyl, amide, carboxyl, an ester group, and a halogen atom;

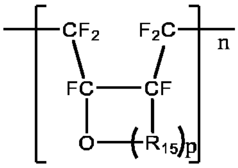

Formula (AIII);

in formula (AIII), $R_{15}$ includes a single bond, and substituted or unsubstituted C1-C3 alkyl; when substituted, the substituents include one or more of a nitrile group (-CN), a nitro group, a sulfonic group, sulfonyl, amide, carboxyl, an ester group, and a halogen atom; p is selected from positive integers from 1 to 3; and n is selected from positive integers from 1000 to 30000.

In some embodiments, the lyophilic polymer includes an ether polymer, and the ether polymer is made into a sheet-like structural body; the sheet-like structural body is subjected to dynamic frequency scanning test at $(T_{m2}+20)$°C to obtain an elastic modulus G'-loss modulus G" curve, a slope of the elastic modulus G'-loss modulus G" curve is $K_1$, wherein $1<K_1<\infty$, and $T_{m2}$°C represents a melting temperature of the ether polymer; optionally, $1<K_1\leq 100$; and further optionally, $1<K_1\leq 10$.

In some embodiments, the ether polymer comprises a structural unit represented by formula (BI) and/or a structural unit represented by formula (BII),

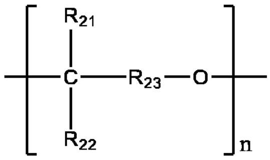

Formula (BI);

in formula (BI), $R_{21}$ and $R_{22}$ each independently comprises a hydrogen atom, substituted or unsubstituted C1-C3 alkyl, or substituted or unsubstituted C1-C3 alkoxy; and $R_{23}$ comprises substituted or unsubstituted C1-C5 alkylene;

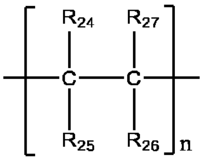

Formula (BII);

in formula (BII), $R_{24}$ to $R_{27}$ each independently comprises a hydrogen atom, substituted or unsubstituted C1-C3 alkyl, substituted or unsubstituted C1-C3 alkoxy or an ether group, and at least one of $R_{24}$ to $R_{27}$ comprises substituted or unsubstituted C1-C3 alkoxy or an ether group.

In some embodiments, substituents may include one or more of a nitrile group (-CN), a nitro group, a sulfonic group, sulfonyl, amide, carboxyl, an ester group, and a halogen atom.

In some embodiments, the lyophilic polymer includes an ester polymer, and the ester polymer is made into a sheet-like structural body; the sheet-like structural body is subjected to dynamic frequency scanning test at $(T_{m3}+20)$°C to obtain an elastic modulus G'-loss modulus G" curve, a slope of the elastic modulus G'-loss modulus G" curve is $K_2$, wherein $1<K_2<\infty$, and $T_{m3}$°C represents a melting temperature of the ester polymer, optionally, $1<K_2\leq 100$; and further optionally, $1<K_2\leq 10$.

In some embodiments, the ester polymer comprises a structural unit represented by formula (CI) and/or a structural unit represented by formula (CII),

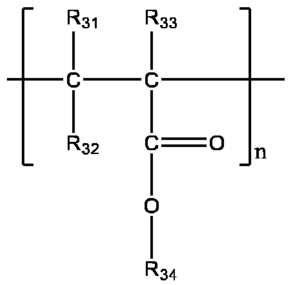

Formula (CI);

in formula (CI), $R_{31}$, $R_{32}$ and $R_{33}$ each independently comprises a hydrogen atom or substituted or unsubstituted C1-C8 alkyl; and $R_{34}$ comprises substituted or unsubstituted C1-C8 alkyl, or substituted or unsubstituted C1-C8 hydroxyalkyl,

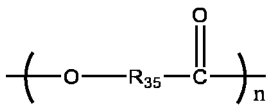

Formula (CII);

in formula (CII), $R_{35}$ comprises substituted or unsubstituted C2-C6 methylene; and optionally, $R_{35}$ each independently comprises substituted or unsubstituted C2-C4 methylene.

In some embodiments, substituents may include one or more of a nitrile group (-CN), a nitro group, a sulfonic group, sulfonyl, amide, carboxyl, an ester group, and a halogen atom.

In some embodiments, the lyophilic polymer includes an aldehyde-ketone polymer, and the aldehyde-ketone polymer is made into a sheet-like structural body; the sheet-like structural body is subjected to dynamic frequency scanning test at $(T_{m4}+20)$°C to obtain an elastic modulus G'-loss modulus G" curve, a slope of the elastic modulus G'-loss G" curve is $K_3$, wherein $0.8 \leq K3 < \infty$, and $T_{m4}$°C represents a melting temperature of the aldehyde-ketone polymer; optionally, $0.8 \leq K_3 \leq 100$; and further optionally, $0.8 \leq K_3 \leq 10$.

In some embodiments, the aldehyde-ketone polymer comprises a structural unit represented by formula (DI) and/or a structural unit represented by formula (DII),

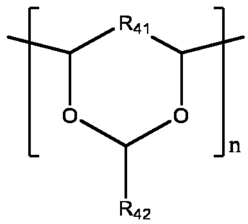

Formula (DI);

in formula (DI), $R_{41}$ comprises a single bond, and substituted or unsubstituted C1-C6 methylene; and $R_{42}$ comprises a hydrogen atom, and substituted or unsubstituted C1-C6 alkyl;

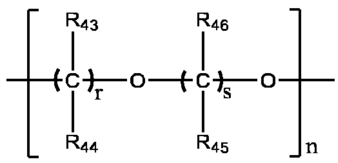

Formula (DII);

in formula (DII), $R_{43}$ to $R_{46}$ each independently comprises a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from an integer in a range from 0 to 5, and at least one of r and s is selected from a positive integer.

In some embodiments, substituents may include one or more of a nitrile group (-CN), a nitro group, a sulfonic

group, sulfonyl, amide, carboxyl, an ester group, and a halogen atom.

In some embodiments, a molecular weight of the lyophilic polymer is in a range from $1.2\times10^5$g/mol to $1\times10^6$g/mol.

A second aspect of the present application further provides a battery, including the battery cell according to any embodiment of the first aspect of the present application.

A third aspect of the present application further provides an electrical apparatus, including the battery according to the embodiment of the second aspect of the present application.

## BRIEF DESCRIPTION OF DRAWINGS

In order to illustrate technical solutions of the examples of the present application more clearly, a brief introduction of drawings to be used in the examples of the present application will be made below. Apparently, the drawings described below are merely some examples of the present application, and other drawings can be obtained according to these drawings by those skilled in the art without creative efforts.

FIG. 1 is a schematic view of an embodiment of a battery cell of the present application;
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4;
FIG. 6 is a schematic view of an embodiment of an electrical apparatus using a battery cell of the present application as a power supply.

The drawings may not be drawn according to the actual scale.

Description of reference numerals:

1, Battery pack; 2, Upper box body; 3, Lower box body; 4, Battery module;
5, Battery cell; 51, Housing; 52, Electrode assembly;
53, Cover plate;
6, Electrical apparatus.

## DETAILED DESCRIPTION

Hereinafter, embodiments specifically disclosing a battery cell, a battery and an electrical apparatus of the present application are described in detail. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to

the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the present application, the terms "a plurality of" and "multiple" refer to two or more.

Unless otherwise stated, the terms used in the present application have the well-known meanings commonly understood by those skilled in the art.

Unless otherwise stated, numerical values of parameters mentioned in the present application may be measured using various testing methods commonly used in the art. For example, the numerical values may be measured according to testing methods given in the examples of the present application.

The term "alkyl" encompasses both straight and branched chain alkyl. For example, the alkyl may be C1-C5 alkyl, C1-C4 alkyl, C1-C3 alkyl, or C1-C2 alkyl. In some embodiments, the alkyl includes methyl, ethyl, propyl, isopropyl, butyl, isobutyl, and the like. Additionally, the alkyl may be optionally substituted. When substituted, substituents include fluorine atoms.

The term "alkoxy" refers to a group in which alkyl is connected to an oxygen atom via a single bond. For example, the alkoxy may be C1-C5 alkoxy, a C1-C3 alkoxy, or $C_1$-$C_2$ alkoxy. In some embodiments, the alkoxy may include methoxy, ethoxy, and propoxy. Additionally, alkoxy may be optionally substituted.

The term "halogen atom" means a fluorine atom, a chlorine atom, a bromine atom or the like.

The term "hydrogen" refers to 1H (protium, H), 2H (deuterium, D) or 3H (tritium, T). In various examples, "hydrogen" may be 1H (protium, H).

A battery cell includes an electrode assembly and an electrolyte solution. The electrode assembly includes a positive electrode plate, a negative electrode plate and a separator. The separator is disposed between the positive electrode plate and the negative electrode plate and mainly plays a role in preventing the positive electrode plate and the negative electrode plate from short-circuiting, while allowing active ions to freely pass through and form a loop.

The electrolyte solution is soaked in the electrode assembly, so that the active ions are smoothly transferred from the positive electrode plate of the electrode assembly to the negative electrode plate via the separator. However, during the use of the battery cell, the volume of the electrode assembly may change (such as expansion) due to the intercalation and deintercalation of the active ions, which may lead to the electrolyte solution soaked in the electrode assembly being continuously extruded, and the extruded electrolyte solution may not be completely reabsorbed to the electrode assembly, so that the electrode assembly undergoes liquid shortage and metal is locally separated out, which increases the risk of dendrite formation. With the growth of the dendrite, it is possible that the dendrite penetrates through the separator to cause the short circuiting of the positive electrode plate and the negative electrode plate, which deteriorates the use reliability and cycle performance of the battery cell.

In view of the above problems, the present application provides a battery cell, a lyophilic polymer is added to an electrode assembly, after the lyophilic polymer and a free electrolyte solution are contacted and mixed, the electrolyte solution is wrapped between molecular chains of the polymer, so as to form a condensed electrolyte, thereby improving the reliability of the battery cell on the basis of ensuring electrical performance of the battery cell. Technical solutions of the present application are illustrated in detail hereinafter.

## Battery cell

In a first aspect, the present application provides a battery cell, including an electrode assembly and an electrolyte, wherein the electrode assembly includes a first electrode plate, a second electrode plate, and a separator, the first electrode plate and the second electrode plate have opposite polarities, the separator is disposed between the first electrode plate and the second electrode plate, and at least one of the first electrode plate, the second electrode plate, and the separator includes a lyophilic polymer.

The battery cell satisfies the following formula:

$$0 \leq \frac{y}{(p1*v1+p2*v2+p3*v3)} \leq 23\%;$$

p1 represents a porosity of the first electrode plate;

v1 represents a total volume of the first electrode plate, with a unit of $\mu m^3$;
p2 represents a porosity of the second electrode plate; and
v2 represents a total volume of the second electrode plate, with a unit of $\mu m^3$;
p3 represents a porosity of the separator;
v3 represents a total volume of the separator, with a unit of $\mu m^3$; and
y represents mass of a free electrolyte solution in the battery cell, with a unit of g.

In the embodiment of the present application, the porosity has a meaning known in the art and can be detected by using equipment and methods known in the art. For example, the porosity $p = [(v - m)/v] \times 100\%$ may be obtained by a gas displacement method. The v represents an apparent volume (i.e., the total volume), and m represents a real volume.

$p * v = v - m$, $p * v$ represents a pore volume of a sample, $p1 * v1 + p2 * v2 + p3 * v3$ represents a sum of a pore volume of the first electrode plate, a pore volume of the second electrode plate and a pore volume of the separator, that is, it can be considered as the overall pore volume of the electrode assembly.

In the embodiment of the present application, the total volume v is a well known meaning in the art, and may be detected using equipment and methods well known in the art. For example, a length, width, and height of the sample are measured using a scale, a product of the length, the width, and the height is calculated to obtain the total volume.

In the embodiment of the present application, after the electrolyte solution is injected into the battery cell, the electrolyte solution mainly exists in the following forms: first, the electrolyte solution is adsorbed in the electrode plate and/or the separator; second, the electrolyte solution and the lyophilic polymer form a condensed electrolyte; third, the electrolyte solution is in a liquid state and is free in the battery cell; and y represents mass of the electrolyte solution in the third state, namely, the mass of the free electrolyte solution. The mass of the free electrolyte solution may be measured by using the following method: a fresh battery cell is taken and fully discharged to 0% state of charge (SOC), a hole with a diameter of φ5-8mm is formed at a local position of the battery cell, and the battery cell is placed on an upper portion of a container with the hole facing downward and directly above the container, so that the free electrolyte solution inside the battery cell can drip into the container below; and the battery cell is left to stand for 3 h to 5 h, so that the free electrolyte solution inside can all drip into the container, and then the weight of the electrolyte solution in the container is weighed to obtain y. In the embodiment of the present application, the fresh battery cell may be a battery cell that has just left the factory (not subjected to charge and discharge cycles after formation), or a battery cell that is assembled on an electrical apparatus and has been cycled less than 10 times. $\frac{y}{(p1*v1+p2*v2+p3*v3)}$ represents a ratio of the free electrolyte solution to the pore volume of the electrode assembly, and can characterize an adsorption capability of the electrode assembly to the free electrolyte solution.

When the embodiments of the present application meet the above formula range, the lyophilic polymer and an electrolyte solution have good affinity, the electrolyte solution can be rapidly diffused between molecular chains of the lyophilic polymer, and be wrapped by the molecular chains, and after swelling and adsorption, an elastic porous slow-release electrolyte is obtained. The slow-release electrolyte can absorb the free electrolyte solution in the battery cell, and reduce the presence of the free electrolyte solution. Because the free electrolyte solution is locked, a risk of extrusion of the free electrolyte solution is reduced, thereby reducing a risk of short circuit of a positive electrode plate and a negative electrode plate caused by dendrite formation, and improving the use reliability and cycle performance of the battery cell. Further, the absorbed free electrolyte solution and the elastic porous slow-release electrolyte form a new condensed electrolyte, which can ensure that the electrolyte has a higher conductivity, thereby improving electrical performance of the battery cell.

Therefore, when the embodiments of the present application satisfy $0 \leq \frac{y}{(p1*v1+p2*v2+p3*v3)} \leq 23\%$, optionally, $0.01\% \leq \frac{y}{(p1*v1+p2*v2+p3*v3)} \leq 20\%$, and further optionally, $0.05\% \leq \frac{y}{(p1*v1+p2*v2+p3*v3)} \leq 15\%$, the reliability and the electrical performance of the battery cell can be improved.

Exemplarily, $\frac{y}{(p1*v1+p2*v2+p3*v3)}$ may be

0%, 0.001%, 0.002%, 0.003%, 0.004%, 0.005%, 0.006%, 0.007%, 0.008%, 0.009%, 0.01%, 0.012%, 0.014%, 0.016%, 0.018%, 0.02%, 0.022%, 0.024%, 0.026%, 0.028%, 0.03%, 0.032%, 0.034%, 0.036%, 0.038%, 0.04%, 0.042%, 0.044%, 0.046%, 0.048%, 0.05%, 0.052%, 0.054%, 0.056%, 0.058%, 0.06%, 0.062%, 0.064%, 0.066%, 0.068%, 0.07%, 0.072%, 0.074%, 0.076%, 0.078%, 0.08%, 0.082%, 0.084%, 0.086%, 0.088%, 0.09%, 0.092%, 0.094%, 0.096%, 0.098%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00% 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 4.10%, 4.20%, 4.30%, 4.40%, 4.50%, 4.60%, 4.70%, 4.80%, 4.90%, 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 7.10%, 7.20%,

7.30%, 7.40%, 7.50%, 7.60%, 7.70%, 7.80%, 7.90%, 8.00%, 8.10%, 8.20%, 8.30%, 8.40%, 8.50%, 8.60%, 8.70%, 8.80%, 8.90%, 9.00%, 9.10%, 9.20%, 9.30%, 9.40%, 9.50%, 9.60%, 9.70%, 9.80%, 9.90%, 10%, 10.10%, 10.20%, 10.30%, 10.40%, 10.50%, 10.60%, 10.70%, 10.80%, 10.90%, 11.00%, 11.10%, 11.20%, 11.30%, 11.40%, 11.50%, 11.60%, 11.70%, 11.80%, 11.90%, 12.00%, 12.10%, 12.20%, 12.30%, 12.40%, 12.50%, 12.60%, 12.70%, 12.80%, 12.90%, 13.00%, 13.10%, 13.20%, 13.30%, 13.40%, 13.50%, 13.60%, 13.70%, 13.80%, 13.90%, 14.00%, 14.10%, 14.20%, 14.30%, 14.40%, 14.50%, 14.60%, 14.70%, 14.80%, 14.90%, 15.00%, 15.50%, 16.00%, 16.50%, 17.00%, 17.50%, 18.00%, 18.50%, 19.00%, 19.50%, 20.00%, 20.50%, 21.00%, 21.50%, 22.00%, 22.50%, 23.00%, or a range consisting of any two of the above values.

In some embodiments, the battery cell further satisfies the following formula:

$$100\% \leq \frac{y+m_1-m_2}{(p1*v1+p2*v2+p3*v3)} \leq 200\%;$$

$m_1$ represents mass of the electrode assembly before drying, with a unit of g; the mass before drying represents the mass of the electrode assembly obtained by disassembling the battery cell, taking out the electrode assembly, and standing the electrode assembly for 3 h to 5 h to allow the free electrolyte solution in the electrode assembly to flow out.

$m_2$ represents mass of the electrode assembly after drying, with a unit of g; the mass after drying represents the mass of the electrode assembly obtained by drying and removing the electrolyte solution adsorbed by the electrode assembly. For example, the electrode assembly is placed in an oven, dried for 24 h to 48 h at 60°C to 95°C, further soaked with a dimethyl carbonate DMC solvent, further placed in the oven, and dried for 24 h to 48 h at 60°C to 95°C, and then the obtained electrode assembly is the electrode assembly after drying.

$m_2$-$m_1$ represents the mass of the electrolyte solution adsorbed in the electrode assembly; and y+$m_2$-$m_1$ represents a sum of the mass of the free electrolyte solution and the mass of the electrolyte solution adsorbed in the electrode assembly, and can be considered as the total amount of the electrolyte solution in the battery cell. $\frac{y+m_1-m_2}{(p1*v1+p2*v2+p3*v3)}$, characterizes a content of the electrolyte solution corresponding to the total pore volume of the electrode assembly, and can characterize the content of the electrolyte solution that can be adsorbed by the electrode assembly.

When the embodiments of the present application satisfy the above formula range $100\% \leq \frac{y+m_1-m_2}{(p1*v1+p2*v2+p3*v3)} \leq 200\%$, the reliability of the battery cell can further be improved. Optionally, $120\% \leq \frac{y+m_1-m_2}{(p1*v1+p2*v2+p3*v3)} \leq 160\%$; further optionally, $130\% \leq \frac{y+m_1-m_2}{(p1*v1+p2*v2+p3*v3)} \leq 140\%$. Exemplarily, $\frac{y+m_1-m_2}{(p1*v1+p2*v2+p3*v3)}$ may be 100%, 110%, 120%, 130%, 135%, 140%, 145%, 150%, 155%, 160%, 170%, 180%, 190%, 200%, or a range consisting of any two of the above values.

In some embodiments, the amount of a free electrolyte solution per unit capacity of the battery cell is b, with a unit of mg/Ah, and 0≤b≤1400. When the amount b of the free electrolyte solution per unit capacity of the battery cell satisfies the above range, the use reliability and cycle performance of the battery cell can be further improved.
optionally, 0.1≤b≤1000; and further optionally, 0.3≤b≤800. Exemplary, the amount of the free electrolyte solution per unit capacity of the battery cell may be 0 mg/Ah, 0.001 mg/Ah, 0.002 mg/Ah, 0.003 mg/Ah, 0.004 mg/Ah, 0.005 mg/Ah, 0.006 mg/Ah, 0.007 mg/Ah, 0.008 mg/Ah, 0.009 mg/Ah, 0.01 mg/Ah, 0.02 mg/Ah, 0.03 mg/Ah, 0.04 mg/Ah, 0.05 mg/Ah, 0.06 mg/Ah, 0.07 mg/Ah, 0.08 mg/Ah, 0.09 mg/Ah, 0.1 mg/Ah, 0.2 mg/Ah, 0.3 mg/Ah, 0.5 mg/Ah, 1.0 mg/Ah, 5.0 mg/Ah, 10.0 mg/Ah, 20.0 mg/Ah, 50.0 mg/Ah, 80.0 mg/Ah, 100 mg/Ah, 120 mg/Ah, 150 mg/Ah, 180 mg/Ah, 200 mg/Ah, 220 mg/Ah, 250 mg/Ah, 300 mg/Ah, 350 mg/Ah, 400 mg/Ah, 450 mg/Ah, 500 mg/Ah, 550 mg/Ah, 600 mg/Ah, 650 mg/Ah, 700 mg/Ah, 750 mg/Ah, 800 mg/Ah, 850 mg/Ah, 900 mg/Ah, 950 mg/Ah, 1000 mg/Ah, 1050 mg/Ah, 1100 mg/Ah, 1150 mg/Ah, 1200 mg/Ah, 1250 mg/h, 1300 mg/Ah, 1350 mg/Ah, 1400 mg/Ah, or a range consisting of any two of the above values.

In the embodiments of the present application, b is equal to y/x, and x represents the nominal capacity of the battery cell with a unit of Ah. y is the mass of the free electrolyte solution mentioned earlier.

In the embodiments of the present application, x may be detected using methods and equipment well known in the art, such as a product of all current magnitudes outputted by a battery cell in a fully charged state when discharged to a termination voltage at a constant current and voltage of 0.33 C, and the discharge time.

In some embodiments, after the linear frequency sweep vibration test, the battery cell is charged to 100% state of charge (SOC), a hole is formed in the battery cell, the hole is formed in the lowest point in a vertical direction, and the mass of the electrolyte solution flowing out of the battery cell is recorded as M1, 0 ≤M1≤6g, and optionally, M1 is 0 g; wherein,

a vibration direction of the linear frequency sweep vibration test is: upward and downward single vibration;

a vibration frequency of the linear frequency sweep vibration test is: 10 Hz-55 Hz;
a maximum acceleration of the linear frequency sweep vibration test is: 30m/s2;
the number of sweep frequency cycles of the linear frequency sweep vibration test is: 10 times; and
a vibration time of the linear frequency sweep vibration test is: 3 h.

In the related art, during the use, the battery cell may vibrate due to an external force. The electrolyte solution in the electrode assembly may separate from the electrode assembly due to the vibration to form the free electrolyte solution, and the free electrolyte solution in the battery cell may leak, causing corrosion to the battery cell and leading to risks such as failure of the battery cell. The embodiment of the present application can effectively gather and throw out the electrolyte solution inside the battery cell by performing static and vibration treatment on the battery cell, thereby more accurately judging whether there is flowing electrolyte solution between a housing of the battery cell and the electrode assembly and determining the content of the free electrolyte solution. When the battery cell of the embodiment of the present application meets the above conditions, the content of free electrolyte in the battery cell is extremely small, or even the battery cell basically contains no free electrolyte, which can significantly improve the reliability and cycle performance of the battery cell.

Exemplary, M1 may be 0, 0.05 g, 0.10 g, 0.15 g, 0.20 g, 0.25 g, 0.3 g, 0.35 g, 0.4 g, 0.45 g, 0.5 g, 0.55 g, 0.60 g, 0.65 g, 0.70 g, 0.75 g, 0.80 g, 0.85 g, 0.90 g, 0.95 g, 1.00 g, 1.10 g, 1.20 g, 1.30 g, 1.40 g, 1.50 g, 1.60 g, 1.70 g, 1.80 g, 1.90 g, 2.00 g, 2.10 g, 2.20 g, 2.30 g, 2.40 g, 2.50 g, 2.60 g, 2.70 g, 2.80 g, 2.90 g, 3.00 g, 3.10 g, 3.20 g, 3.30 g, 3.40 g, 3.50 g, 3.60 g, 3.70 g, 3.80 g, 3.90 g, 4.00 g, 4.10 g, 4.20 g, 4.30 g, 4.40 g, 4.50 g, 4.60 g, 4.70 g, 4.80 g, 4.90 g, 5.00 g, 6.00 g, or a range consisting of any two of the above values. When M1 is 0 g, it indicates that the amount of the free electrolyte solution is 0, that is, there is basically no free electrolyte solution in the battery cell after the linear frequency sweep vibration test.

In some embodiments, after the battery cell undergoes the above linear frequency sweep vibration test, the housing is removed, the electrode assembly is taken out and subjected to an extrusion test, and the volume of the electrolyte flowing out of the electrode assembly is recorded as M2 (the extrusion apparatus is suspended, and a weighing balance and an electrolyte solution collection container are disposed at the bottom), 0 ≤M2≤0.6g, optionally, M2 is 0 g; wherein

an extrusion direction of the extrusion test is: perpendicular to a thickness direction of the electrode assembly; and
an extrusion degree of the extrusion test is: an extrusion force is 0.35 MPa.

In the related art, during the use, the battery cell may be subjected to external extrusion. The electrolyte solution in the electrode assembly may separate from the electrode assembly due to the extrusion to form the free electrolyte solution, and the free electrolyte solution in the battery cell may leak, causing corrosion to the battery cell and leading to risks such as failure of the battery cell. The embodiment of the present application can effectively extrude the electrolyte solution inside the battery cell to flow out by performing extrusion test on the battery cell, thereby more accurately judging whether there is flowing liquid electrolyte between a housing of the battery cell and the electrode assembly and determining the content of the free electrolyte solution. When the battery cell of the embodiment of the present application meets the above conditions, the content of free electrolyte in the battery cell is extremely small, or even the battery cell basically contains no free electrolyte, which can significantly improve the reliability and cycle performance of the battery cell.

Exemplarily, M2 may be 0, 0.05 mg, 0.10 mg, 0.15 mg, 0.20 mg, 0.25 mg, 0.3 mg, 0.35 mg, 0.4 mg, 0.45 mg, 0.5 mg, 0.55 mg, 0.60 mg, 0.65 mg, 0.70 mg, 0.75 mg, 0.80 mg, 0.85 mg, 0.90 mg, 0.95 mg, 1.00 mg, 1.10 mg, 1.20 mg, 1.30 mg, 1.40 mg, 1.50 mg, 1.60 mg, 1.70 mg, 1.80 mg, 1.90 mg, 2.00 mg, 2.10 mg, 2.20 mg, 2.30 mg, 2.40 mg, 2.50 mg, 2.60 mg, 2.70 mg, 2.80 mg, 2.90 mg, 3.00 mg, 3.10 mg, 3.20 mg, 3.30 mg, 3.40 mg, 3.50 mg, 3.60 mg, 3.70 mg, 3.80 mg, 3.90 mg, 4.00 mg, 4.10 mg, 4.20 mg, 4.30 mg, 4.40 mg, 4.50 mg, 4.60 mg, 4.70 mg, 4.80 mg, 4.90 mg, 5.00 mg, 10.00 mg, 20.00 mg, 30.00 mg, 40.00 mg, 50.00 mg, 60.00 mg, 70.00 mg, 80.00 mg, 90.00 mg, 100.00 mg, 110.00 mg, 120.00 mg, 130.00 mg, 140.00 mg, 150.00 mg, 160.00 mg, 170.00 mg, 180.00 mg, 190.00 mg, 200.00 mg, 210.00 mg, 220.00 mg, 230.00 mg, 240.00 mg, 250.00 mg, 260.00 mg, 270.00 mg, 280.00 mg, 290.00 mg, 300.00 mg, 310.00 mg, 320.00 mg, 330.00 mg, 340.00 mg, 350.00 mg, 360.00 mg, 370.00 mg, 380.00 mg, 390.00 mg, 400.00 mg, 410.00 mg, 420.00 mg, 430.00 mg, 440.00 mg, 450.00 mg, 460.00 mg, 470.00 mg, 480.00 mg, 490.00 mg, 500.00 mg, 510.00 mg, 520.00 mg, 530.00 mg, 540.00 mg, 550.00 mg, 560.00 mg, 570.00 mg, 580.00 mg, 590.00 mg, 600.00 mg, or any two of the above numbers. When M2 is 0 g, it indicates that the amount of the free electrolyte solution is 0, that is, there is basically no free electrolyte solution in the battery cell after the extrusion test.

In the present application, the extrusion test may be performed after the linear frequency sweep vibration test, that is, the battery cell is first subjected to the linear frequency sweep vibration test, and then subjected to the extrusion test, and the value M2 is measured, 0 ≤M2≤0.5g, and optionally, M2 is 0 g;

In some embodiments, within 4 h of supplying 200V voltage to the battery cell to form a loop, an absolute value of the temperature change of the battery cell is less than or equal to 4°C.

For example, a negative terminal and a housing of the battery cell are connected with the 200V voltage to form a

current loop, a temperature fluctuation range of the battery cell is less than or equal to 4°C within 4 h, and the battery cell has no failure behavior such as fire and explosion. Especially in a case where the free electrolyte solution y=0, the temperature fluctuation range is small, and the use reliability of the battery cell is greatly improved.

In some embodiments, the electrode plate contains a lyophilic polymer. Specifically, the first electrode plate includes a current collector and an active material layer disposed on at least one surface of the current collector, and the active material layer includes a lyophilic polymer and active material particles. The lyophilic polymer may be only disposed in the first electrode plate, or only disposed in the second electrode plate, or the lyophilic polymer is disposed in the first electrode plate and the second electrode plate. The first electrode plate may be a positive electrode plate, and correspondingly, and the second electrode plate may be a negative electrode plate; or the first electrode plate may be a negative electrode plate, and correspondingly, the second electrode plate may be a positive electrode plate.

As some examples, the lyophilic polymer is distributed on surfaces of the active material particles; and it can be understood that the active material particles, a binder and the like are cured on the surface of the current collector to form a film layer, and the lyophilic polymer is disposed on a surface of the film layer facing away from the current collector. Through such arrangement, the electrolyte solution can be rapidly diffused between the molecular chains of the lyophilic polymer and wrapped by the molecular chains, and a gel-state substance can be formed on the surfaces of the active material particles, and adhered to the surfaces of the active material particles to play a role in protecting the active material particles. In this way, the active material particles and the electrolyte solution are closely connected, solid-liquid interface performance is improved, a side reaction between the active material particles and the electrolyte solution can be reduced, and the reliability and the electric performance (such as the cycle performance and the storage performance) of the battery cell are improved.

Specifically, a preparation process of the electrode plate includes:

the active material particles are added into a solvent to be prepared into an active slurry;
the active slurry is coated on the surface of the current collector, and is dried and cured into a film layer; and
the lyophilic polymer is disposed on the surface of the film layer to form the electrode plate.

As some other examples, a plurality of active material particles are provided, a pore exists between every two adjacent active material particles, and the lyophilic polymer is distributed at the pore between the active material particles. Such arrangement form can improve the liquid storage capability of the active material layer, that is, the capability to lock the electrolyte solution, thereby improving the reliability and electrical performance of the battery cell.

Specifically, a preparation process of one example of the electrode plate includes:

the lyophilic polymer is dispersed in the solvent to form a mixed system;
the active material particles are added into the mixed system to be prepared into a slurry; and
the slurry is coated on the surface of the current collector, and is dried and cured into the electrode plate.

Specifically, a preparation process of another example of the electrode plate includes:

the lyophilic polymer and the active material particles are dispersed in the solvent to be prepared into a slurry; and

the slurry is coated on the surface of the current collector, and is dried and cured into the electrode plate.

As further examples, the lyophilic polymer is distributed on the surfaces of the active material particles, and the lyophilic polymer is distributed at the pore between the active material particles.

Specifically, a preparation process of one example of the electrode plate includes:

the lyophilic polymer and the active material particles are dispersed in the solvent to be prepared into a slurry; and
the slurry is coated on the surface of the current collector, and is dried and cured into a film layer; and
the lyophilic polymer is disposed on the surface of the film layer to form the electrode plate.

In other embodiments, the separator includes the lyophilic polymer. Specifically, the separator may include a substrate. Optionally, the separator may further include a coating disposed on at least one surface of the substrate.

As some examples, the substrate is generally of a porous structure, the porous structure has pores, and the lyophilic polymer may be distributed at pores of the substrate.

As some other examples, the lyophilic polymer may be distributed in the coating.

As further examples, the lyophilic polymer may be disposed on a surface of the coating facing away from the substrate.

The specific distribution position of the lyophilic polymer may be any one of the above three forms, may also be

any two forms, and may also be a combination of the above three positions.

In still further embodiments, the lyophilic polymer may be disposed in the electrode plate and the separator, the specific disposing position is describe above and is not restated herein.

In some embodiments, the lyophilic polymer may include one or more of a fluorinated polymer, an ether polymer, an ester polymer, and a ketone-aldehyde polymer.

[Fluorinated polymer]

In some embodiments, the lyophilic polymer includes a fluorinated polymer; crystallinity of the fluorinated polymer measured by differential scanning calorimetry is $X_{C1}$%, $0<X_{C1}\leq 30$; and a melting temperature of the fluorinated polymer is $T_{m1}$, with a unit of °C, and $0<T_{m1}\leq 140$.

Crystallization refers to the process in which atoms, ions or molecules in a material are arranged in a certain spatial order to form an orderly structure. The conformation of the polymer in the crystallization is determined by both intramolecular and intermolecular factors. The intermolecular force will affect a stacking density between the molecular chains. The crystallinity $X_{C1}$% is used to characterize a degree of crystallinity in the material, which can be measured by differential scanning calorimetry (DSC). Specifically, the testing steps are: 0.5g to 0.8g of sample is taken, placed in a carrier crucible, and subjected to heating and cooling treatment under a nitrogen atmosphere, so that the sample is heated from an initial temperature 20°C lower than intrinsic $T_{g1}$ of the material to a cutoff temperature 20°C higher than intrinsic $T_{m1}$ of the material at a heating rate of 10°C/min, and an actual glass transition temperature $T_{g1}$ and melting temperature $T_{m1}$ of the material are determined according to an endothermic and exothermic peak value or transition point of the material in the process.

As a result, the fluorinated polymer has the relatively low crystallinity and melting temperature, which makes the molecular chain arrangement tend to be loose, an interaction force between the molecular chains is small, adjacent molecular chains are easily opened, and the chain segment movement is achieved through intermolecular internal rotation, forming a molecular chain structure with high flexibility; and the fluorinated polymer and the electrolyte solution in the battery cell can form a gel-state substance, thereby improving the use reliability and cycle performance of the battery cell.

Exemplarily, the crystallinity Xci% of the fluorinated polymer measured by the differential scanning calorimetry may be 5%, 10%, 15%, 20%, 25%, 30%, or a range consisting of any two of the above values.

Exemplarily, the melting temperature of the fluorinated polymer may be 10°C, 20°C, 50°C, 70°C, 90°C, 100°C, 120°C, 140°C, or a range consisting of any two of the above values.

In some embodiments, a glass transition temperature of the fluorinated polymer is $T_{g1}$, with a unit of °C, and $-150\leq T_{g1}\leq 60$.

The glass transition temperature is a transition temperature of the polymer chain segments from freezing to movement. The glass transition temperature has a certain influence on the flexibility of the polymer molecular chains. The lower the glass transition temperature, the better the flexibility of the polymer molecular chains at room temperature. The higher the glass transition temperature, the worse the flexibility of the molecular chains at room temperature. The glass temperature may be measured by the differential scanning calorimetry (DSC). The glass transition temperature of the polymer is relatively low, the flexibility of the molecular chain segments is better, and adjacent molecular chains are easier to open. Exemplarily, the glass transition temperature of the fluorinated polymer may be -150°C, -120°C, -100°C, -80°C, -60°C, -30°C, 0°C, 30°C, 60°C, or a range consisting of any two of the above values.

In some embodiments, the fluorinated polymer includes at least one of a structural unit represented by formula (AI) to a structural unit represented by formula (AIII),

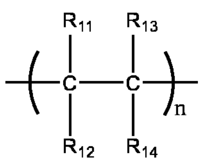 Formula (AI), 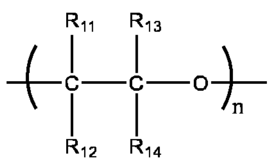 Formula (AII),

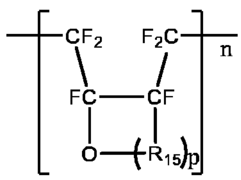 Formula (AIII);

in formula (AI) and formula (AII), $R_{11}$, $R_{12}$, $R_{13}$ and $R_{14}$ each independently comprises a hydrogen atom, a fluorine atom, a chlorine atom, substituted or unsubstituted C1-C3 alkyl, or substituted or unsubstituted C1-C3 alkoxy, and at least one of $R_{11}$, $R_{12}$, $R_{13}$ and $R_{14}$ comprises a fluorine atom; when substituted, substituents may include one or more of a nitrile group (-CN), a nitro group, a sulfonic group, sulfonyl, amide, carboxyl, an ester group, and a halogen atom.

In formula (AIII), $R_{15}$ includes a single bond, and substituted or unsubstituted C1-C3 alkyl; when substituted, the substituents may include one or more of a nitrile group (-CN), a nitro group, a sulfonic group, sulfonyl, amide, carboxyl, an ester group, and a halogen atom. p is selected from positive integers from 1 to 3. n is selected from positive integers from 1000 to 30000.

In some embodiments, $R_{11}$, $R_{12}$, $R_{13}$ and $R_{14}$ each independently comprises a hydrogen atom, a fluorine atom, a chlorine atom, substituted or unsubstituted C1-C2 alkyl, or substituted or unsubstituted C1-C2 alkoxy. Further optionally, $R_{11}$, $R_{12}$, $R_{13}$ and $R_{14}$ each independently comprises a hydrogen atom, a fluorine atom, a chlorine atom, methyl, fluoromethyl, methoxy or perfluoromethoxy.

In some embodiments, the fluorinated polymer includes at least one of a structural unit represented by formula (AI-1) to a structural unit represented by formula (AI-11),

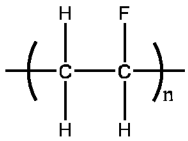 Formula (AI-1), 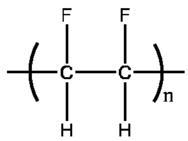 Formula (AI-2), 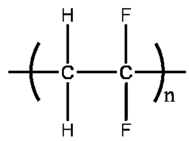 Formula (AI-3),

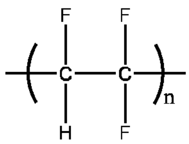 Formula (AI-4), 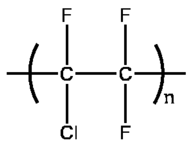 Formula (AI-5), 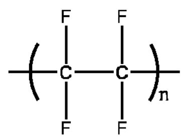 Formula (AI-6),

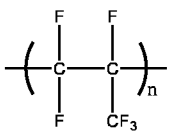 Formula (AI-7), 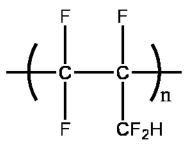 Formula (AI-8), 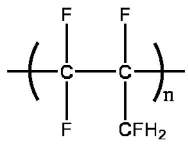 Formula (AI-9),

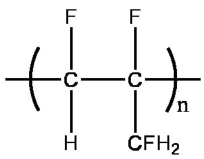 Formula (AI-10), 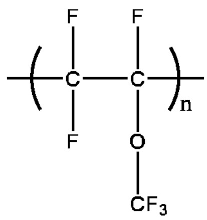 Formula (AI-11).

In some embodiments, the fluorinated polymer includes at least one of a structural unit represented by formula (AII-1) to a structural unit represented by formula (AII-5),

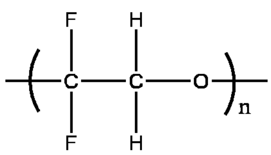 Formula (AII-1), 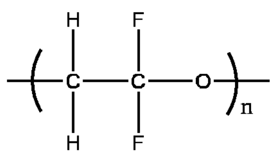 Formula (AII-2),

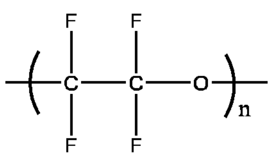 Formula (AII-3), 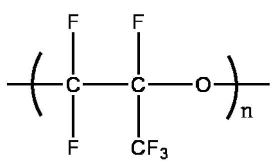 Formula (AII-4),

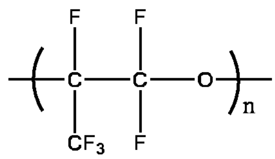
Formula (AII-5).

In some embodiments, the fluorinated polymer includes at least one of a structural unit represented by formula (AIII-1) to a structural unit represented by formula (AIII-3),

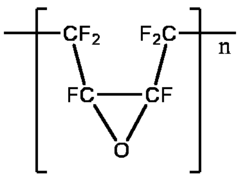
Formula (AIII-1),
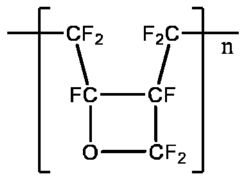
Formula (AIII-2),

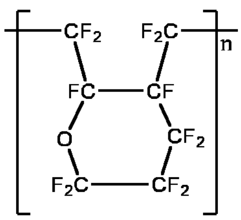
Formula (AIII-3).

Exemplarily, the fluorinated polymer includes one or more of polyperfluoroethylene (PTFE), polyvinylidene fluoride (PVDF), a perfluoroethylene propylene copolymer (FEP), a perfluoroalkoxy polymer (PFA), perfluoropolyether (PFPE), a polyvinylidene fluoride-hexafluoropropylene copolymer (PVDF-HFP), a polyvinylidene fluoride-trifluoroethylene copolymer (PVDF-TrFE) and perfluoro(1-butenyl vinyl ether) polymer (CYTOP for short).
Optionally, the fluorinated polymer includes one or more of polyperfluoroethylene (PTFE), polyvinylidene fluoride (PVDF), a perfluoroethylene propylene copolymer (FEP), a polyvinylidene fluoride-hexafluoropropylene copolymer (PVDF-HFP), and a polyvinylidene fluoride-trifluoroethylene copolymer (PVDF-TrFE).
The fluorinated polymer above may be derived from one or more of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, pentafluoropropylene, and the like. Optionally, the fluorinated polymer above may be derived from at least two of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, pentafluoropropylene, and the like.
The monomers used in the above fluorinated polymer are all short-chain monomers, which are conducive to polymerization to form a straight-chain linear structure or a short branched-chain structure. This type of structure has a low degree of entanglement, which is conducive to improving the flexibility of the molecular chains. The molecular chains can fully stretch in the electrolyte solution, which can further improve interface performance of the active material.
In some embodiments, n is selected from positive integers from 5000 to 20000; and/or a molecular weight of the lyophilic polymer is in a range from $2\times10^5$g/mol to $1.5\times10^6$g/mol. When the molecular weight of the polymer is within the above range, it can ensure that the polymer exhibits a certain solubility in the electrolyte solution, while being difficult to be completely dissolved and dispersed by the electrolyte solution, which is beneficial to regulating the distribution and dispersion of the polymer on a surface of the active substance; and it can further improve the flexibility between the molecular chains of the polymer, and the interaction force between the molecular chains is relatively weak, which is beneficial for solvent molecules in the electrolyte solution to open the molecular chains, enter between the molecular chains, and be wrapped by the molecular chains, thereby facilitating active ions to enter the active substance through the solvent, and realizing smooth and rapid migration of the active ions.
When the molecular weight of the lyophilic polymer is within the above range, it can ensure that the polymer exhibits a certain solubility in the electrolyte solution, while being difficult to be completely dissolved and dispersed by the electrolyte solution, which is beneficial to regulating the distribution and dispersion of the polymer on a surface of the active substance; and it can further improve the flexibility between the molecular chains of the polymer, and the interaction force between the molecular chains is relatively weak, which is beneficial for solvent molecules in the electrolyte solution to open

the molecular chains, enter between the molecular chains, and be wrapped by the molecular chains, thereby facilitating active ions to enter the active substance through the solvent, and realizing smooth and rapid migration of the active ions. Exemplarily, the molecular weight of the polymer may be $2\times10^5$g/mol, $5\times10^5$g/mol, $8\times10^5$g/mol, $1\times10^6$g/mol, $1.5\times10^6$g/mol, or a range consisting of any two of the above values.

[Ether polymer]

In some embodiments, the lyophilic polymer includes an ether polymer, and the ether polymer is made into a sheet-like structural body; and the sheet-like structural body is subjected to dynamic frequency scanning test at ($T_{m2}$ +20)°C to obtain an elastic modulus G'-loss modulus G" curve, a slope of the elastic modulus G'-loss modulus G" curve is $K_1$, wherein $1<K_1<\infty$, and $T_{m2}$°C represents a melting temperature of the ether polymer.

Specifically, a preparation process of the sheet-like structural body is as follows: the ether polymer is vacuum dried at 80°C for 12 h. The dried ether polymer is hot pressed into a thin sheet by a flat vulcanizer. A hot pressing temperature is set to be ($T_{m2}$+20)°C, a calendering thickness is 1-2 min, a calendering time is 2 min, and a pressure is 8 MPa. After calendering for 2 min, the sample is taken out and placed on another vulcanizer of the same model for cold pressing at a pressure of 10 MPa. A round die with a diameter of 25 mm may be used to obtain polymer discs (sheet structures) of a fixed size. Exemplarily, the sheet-like structural body may be a disc with a thickness of 1-2 mm and a diameter of 25 mm; or the sample may be prepared according to the sample standard required by testing equipment.

According to the conclusions of classical linear viscoelasticity, for the polymer, especially the linear polymer, elastic modulus G'-loss modulus G" in a terminal region of an elastic modulus G'-loss modulus G" curve (an interval range approaching a maximum angular velocity) conforms to frequency dependence, and a longest chain of the polymer plays a role in the viscoelastic behavior.

The specific steps of the dynamic frequency scanning test are as follows: the dynamic frequency scanning test is performed using a TA-AR2000EX rotational rheometer (TAinstruments, USA), with a parallel plate having a diameter of 25 mm and a thickness of 0.9 mm. To ensure that the test is conducted in a linear viscoelastic region, the strain during the dynamic frequency scanning test is 2%, the test temperature is $T_{m2}$+20°C, and a frequency sweep range of the test is: 500rad/s$\leq w^2 \leq$0.05rad/s, so as to obtain data in the lowest possible frequency region.

The dynamic frequency scanning test can characterize a degree of entanglement of molecular chains under solid phase melting (melt state). Compared with a linear structure or a short branched structure, a long branched structure, a network structure and a low cross-linked structure which have a high degree of entanglement and shows a behavior of deviating from a linear terminal, the ether polymer shows a solid phase behavior. When the ether polymer of the present application meets the above range, an entanglement state of the molecular chains can be further reduced, which is beneficial to diffusion of solvent molecules in the electrolyte solution between the molecular chains; and the ether polymer still maintains a certain molecular chain entanglement state, and can form a gel-state substance with the electrolyte solution, thereby improving the cycle performance and storage performance of the battery cell.

In some embodiments, $1<K_1\leq100$; and optionally, $1<K_1\leq10$. Exemplarily, $K_1$ may be 0.8, 0.9, 1, 2, 5, 10, 15, 20, 30, 50, 100, 200, 500, 1000, 5000, 10000, or a range consisting of any two of the above values.

In some embodiments, a glass transition temperature of the ether polymer is $T_{g2}$, with a unit of °C, and $-100\leq T_{g2}\leq50$; optionally, $-80\leq T_{g2}\leq30$. Exemplarily, the glass transition temperature of the ether polymer may be -100°C, -80°C, - 60°C, -30°C, 0°C, 30°C, 50°C, or a range consisting of any two of the above values.

In some embodiments, the ether polymer comprises a structural unit represented by formula (BI),

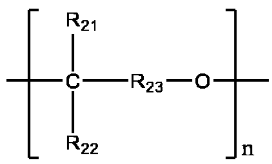

Formula (BI);

in formula (BI), $R_{21}$ and $R_{22}$ each independently comprises a hydrogen atom, substituted or unsubstituted C1-C3 alkyl, or substituted or unsubstituted C1-C3 alkoxy; $R_{23}$ includes substituted or unsubstituted C1-C5 methylene; optionally, $R_{21}$ and $R_{22}$ each independently comprises a hydrogen atom, and substituted or unsubstituted C1-C2 alkyl; and/or $R_{23}$ includes a single bond, and substituted or unsubstituted C1-C4 methylene.

In some examples, the substituents may include one or more of a nitrile (-CN) group, a nitro group, a sulfonic group, a sulfonyl group, an amide, a carboxyl group, an ester group, a halogen atom.

Exemplarily, the ether polymer includes at least one of a structural unit represented by formula (BI-1) to a structural unit represented by formula (BI-8),

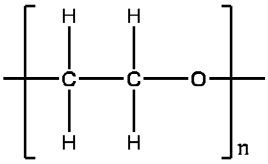 Formula (BI-1), 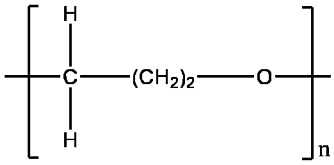 Formula (BI-2),

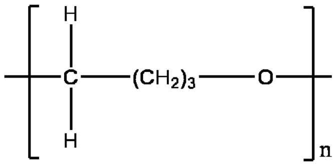 Formula (BI-3), 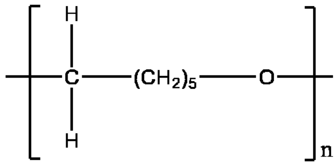 Formula (BI-4),

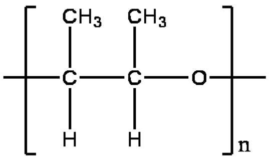 Formula (BI-5), 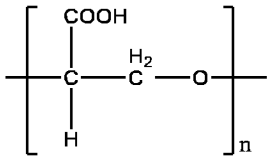 Formula (BI-6),

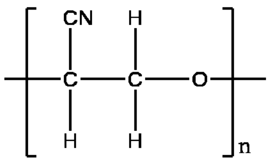 Formula (BI-7), 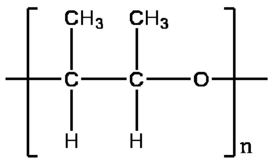 Formula (BI-8).

In some embodiments, the ether polymer comprises a structural unit represented by formula (BII),

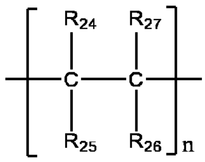 Formula (BII);

in formula (BII), $R_{24}$ to $R_{27}$ each independently comprises a hydrogen atom, substituted or unsubstituted C1-C3 alkyl, substituted or unsubstituted C1-C3 alkoxy or an ether group, and at least one of $R_{24}$ to $R_{27}$ comprises substituted or unsubstituted C1-C3 alkoxy or an ether group.

Optionally, $R_{24}$ to $R_{27}$ each independently comprises a hydrogen atom, substituted or unsubstituted C1-C2 alkyl, substituted or unsubstituted C1-C2 alkoxy or an ether group, and at least one of $R_{24}$ to $R_{27}$ includes substituted or unsubstituted C1-C2 alkoxy or an ether group.

In some embodiments, the ether polymer includes at least one of a structural unit represented by formula (BII-1) to a structural unit represented by formula (BII-7),

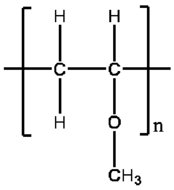 Formula (BII-1), 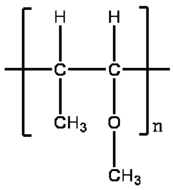 Formula (BII-2), 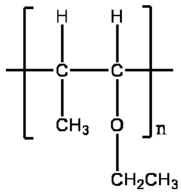 Formula (BII-3),

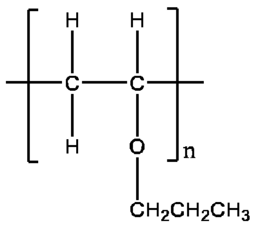 Formula (BII-4), 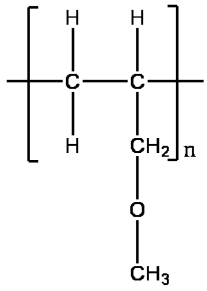 Formula (BII-5),

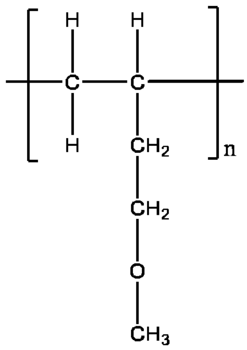 Formula (BII-6), 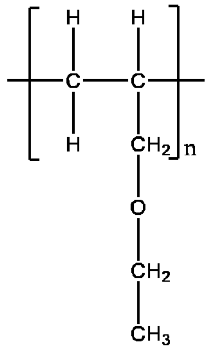 (BII-7).

The monomers used in the above ether polymer are multi-membered rings, such as a structure below a six-membered ring or short chain monomers, which is conducive to polymerization to form a high content of -O- structure. This type of structure has a low degree of entanglement, which is conducive to improving the flexibility of the molecular chains. The molecular chains can be fully stretched in the electrolyte solution, and is easy to form the gel-state substance with the electrolyte solution, thereby improving the cycle performance and storage performance of the battery cell.

The above polymer is only an example of structural groups of the main molecular chains. In the embodiment of the present application, the polymer may also be obtained by copolymerizing the above structural groups with other types of structural groups (such as an olefin structural unit, and an acrylonitrile structural unit).

When the above groups are substituted, substituents may include one or more of a nitrile group (-CN), a nitro group, a sulfonic group, sulfonyl, amide, carboxyl, an ester group, and a halogen atom. The above substituents are high pressure resistant substituents and are more conducive to stabilizing the structure of the polymer. The halogen atom may include a fluorine atom, a chlorine atom, a bromine atom or the like.

In some embodiments, n is a positive integer selected from 1500 to 25000.

Optionally, n is a positive integer selected from 3000 to 18000.

In some embodiments, a molecular weight of the polymer is in a range from $1.2\times10^5$g/mol to $1.0\times10^6$g/mol.

Exemplarily, the molecular weight of the polymer may be $1.2\times10^5$g/mol, $2\times10^5$g/mol, $5\times10^5$g/mol, $8\times10^5$g/mol, $1\times10^6$g/mol, or a range consisting of any two of the above values.

[Ester polymer]

In some embodiments, the lyophilic polymer includes an ester polymer, wherein the ester polymer is made into a sheet-like structural body; and the sheet-like structural body is subjected to dynamic frequency scanning test at ($T_{m3}$ +20)°C to obtain an elastic modulus G'-loss modulus G" curve, a slope of the elastic modulus G'-loss modulus G" curve is $K_2$, wherein $1<K_2<\infty$, and $T_{m3}$°C represents a melting temperature of the ester polymer.

When the ester polymer of the present application meets the above range, an entanglement state of the molecular chains can be further reduced, which is beneficial to diffusion of solvent molecules in the electrolyte solution between the molecular chains; and the ether polymer still maintains a certain molecular chain entanglement state, and can form a gel-state substance with the electrolyte solution, thereby improving the cycle performance and storage performance of the battery cell.

In some embodiments, $1<K_2\leq100$; and optionally, $1<K_2\leq10$.

Exemplarily, $K_2$ may be 1.01, 1.1, 1.2, 1.5, 2, 5, 10, 15, 20, 30, 50, 100, 200, 500, 1000, 5000, 10000, or a range consisting of any two of the above values.

In some embodiments, a glass transition temperature of the ester polymer is $T_{g3}$, with a unit of °C, and $-100\leq T_{g3}\leq50$; optionally, $-80\leq T_{g3}\leq30$.

Exemplarily, the glass transition temperature of the ester polymer may be -100°C, -90°C, -80°C, -60°C, -30°C, 0°C, 30°C, 50°C, or a range consisting of any two of the above values.

In some embodiments, the ester polymer comprises a structural unit represented by formula (CI),

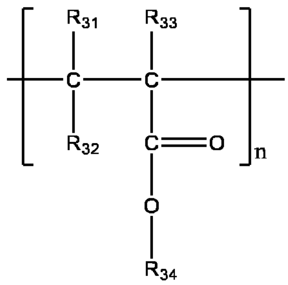
Formula (CI);

in formula (CI), $R_{31}$, $R_{32}$ and $R_{33}$ each independently comprises a hydrogen atom or substituted or unsubstituted C1-C8 alkyl; $R_{34}$ includes substituted or unsubstituted C1-C8 alkyl, or substituted or unsubstituted C1-C8 hydroxyalkyl; optionally, $R_{34}$ includes substituted or unsubstituted C1-C6 alkyl, or substituted or unsubstituted C1-C6 hydroxyalkyl.

Optionally, $R_{31}$ comprises a hydrogen atom or substituted or unsubstituted methyl; $R_{32}$ and $R_{33}$ each independently comprises a hydrogen atom; and $R_{34}$ includes substituted or unsubstituted C1-C4 alkyl, or substituted or unsubstituted C1-C4 hydroxyalkyl.

Exemplarily, the ester polymer includes at least one of a structural unit represented by formula (CI-1) to a structural unit represented by formula (CI-15),

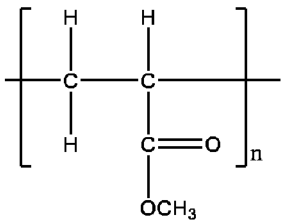
Formula (CI-1),

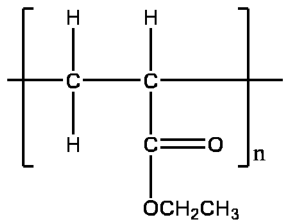
Formula (CI-2),

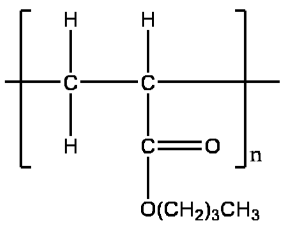
Formula (CI-3),

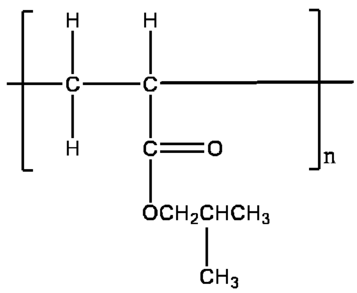
Formula (CI-4),

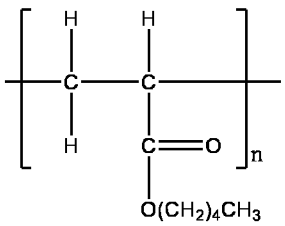
Formula (CI-5),

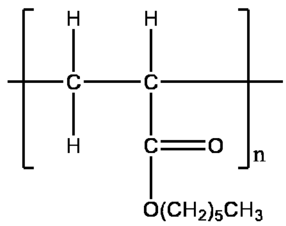
Formula (CI-6),

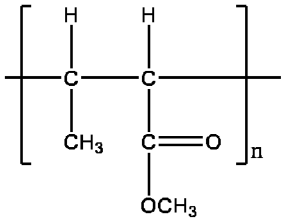
Formula (CI-7),

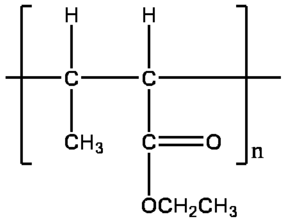
Formula (CI-8),

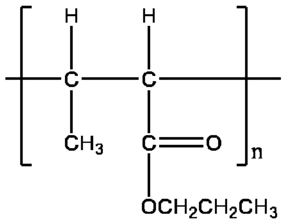
Formula (CI-9),

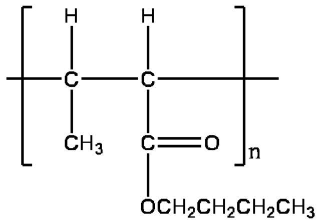
Formula (CI-10),

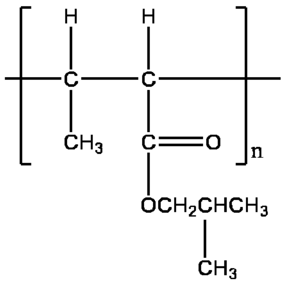
Formula (CI-11),

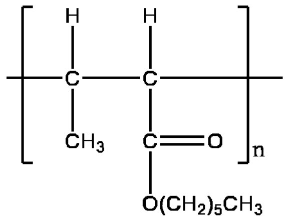
Formula (CI-12),

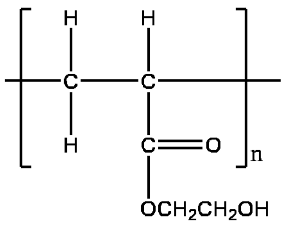
Formula (CI-13),

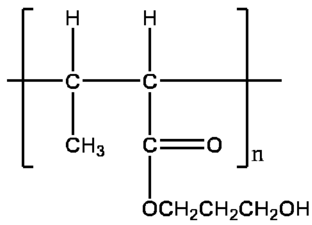
Formula (CI-14),

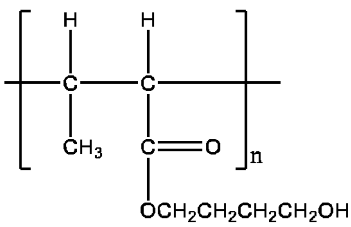
Formula (CI-15).

In some embodiments, the ester polymer comprises a structural unit represented by formula (CII),

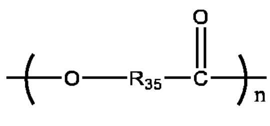
Formula (CII);

in formula (CII), $R_{35}$ comprises substituted or unsubstituted C2-C6 methylene; and optionally, $R_{35}$ each independently comprises substituted or unsubstituted C2-C4 methylene.

Exemplarily, the ester polymer includes at least one of a structural unit represented by formula (CII-1) to a structural unit represented by formula (CII-5),

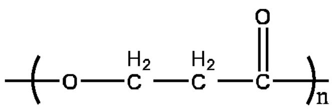 Formula (CII-1), 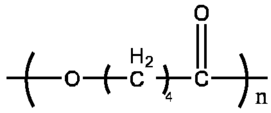 Formula (CII-2),

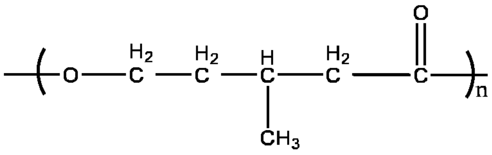 Formula (CII-3), 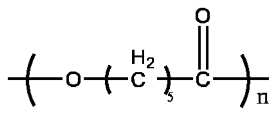 Formula (CII-4),

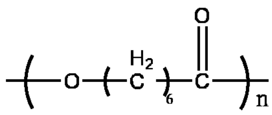 (CII-5).

The molecular chains of the above ester polymer have a low degree of entanglement, which is beneficial to improving the flexibility of the molecular chains. The molecular chains can be fully stretched in the electrolyte solution, and is easy to form the gel-state substance with the electrolyte solution.

The above polymer is only an example of structural groups of the main molecular chains. In the embodiment of the present application, the polymer may also be obtained by copolymerizing the above structural groups with other types of structural groups (such as an olefin structural unit, an acrylonitrile structural unit, maleic anhydride and other monomers with functional groups).

In some embodiments, substituents may include one or more of a nitrile group (-CN), a nitro group, a sulfonic group, sulfonyl, amide, carboxyl, an ester group, and a halogen atom.

In some embodiments, n is a positive integer selected from 800 to 20000.

Optionally, n is a positive integer selected from 1000 to 15000.

In some embodiments, a molecular weight of the polymer is in a range from $1.2\times10^5$g/mol to $1.0\times10^6$g/mol.

Exemplarily, the molecular weight of the polymer may be $1.2\times10^5$g/mol, $2\times10^5$g/mol, $5\times10^5$g/mol, $8\times10^5$g/mol, $1\times10^6$g/mol, $1.5\times10^6$g/mol, or a range consisting of any two of the above values.

[Ketone-aldehyde polymer]

In some embodiments, the lyophilic polymer includes an aldehyde-ketone polymer, wherein the aldehyde-ketone polymer is made into a sheet-like structural body; and the sheet-like structural body is subjected to dynamic frequency scanning test at $(T_{m4}+20)$°C to obtain an elastic modulus G'-loss modulus G" curve, a slope of the elastic modulus G'-loss modulus G" curve is $K_3$, wherein $0.8\leq K_3<\infty$, and $T_{m4}$°C represents a melting temperature of the aldehyde-ketone polymer.

In some embodiments, $0.8\leq K_3\leq100$; and optionally, $0.8\leq K_3\leq10$.

Exemplarily, $K_3$ may be 0.8, 0.9, 1, 2, 5, 10, 15, 20, 30, 50, 100, 200, 500, 1000, 5000, 10000, or a range consisting of any two of the above values.

In some embodiments, a glass transition temperature of the aldehyde-ketone polymer is $T_{g4}$, with a unit of °C, and $-100\leq T_{g4}\leq50$; optionally, $-80\leq T_{g4}\leq30$.

Exemplarily, the glass transition temperature of the aldehyde-ketone polymer may be -100°C, -90°C, -80°C, -60°C, -30°C, 0°C, 30°C, 50°C, or a range consisting of any two of the above values.

In some embodiments, the aldehyde-ketone polymer comprises a structural unit represented by formula (DI),

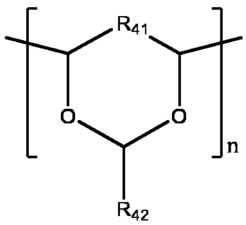 Formula (DI);

in formula (DI), $R_{41}$ comprises a single bond, and substituted or unsubstituted C1-C6 methylene; and $R_{42}$ comprises a hydrogen atom, and substituted or unsubstituted C1-C6 alkyl,
optionally, $R_{41}$ includes a single bond, and substituted or unsubstituted C1-C2 methylene;
optionally, $R_{42}$ comprises a hydrogen atom, and substituted or unsubstituted C1-C3 alkyl.

In the embodiment of the present application, the single bond indicates that the group does not exist, and the atoms on both sides of the group are connected by a single bond. For example, $R_{41}$ is a single bond, which indicates that carbon atoms on both sides of $R_{41}$ are connected by a single bond.

In some embodiments, the aldehyde-ketone polymer includes at least one of a structural unit represented by formula (DI-1) to a structural unit represented by formula (DI-6),

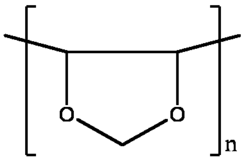
Formula (DI-1),
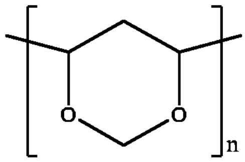
Formula (DI-2),
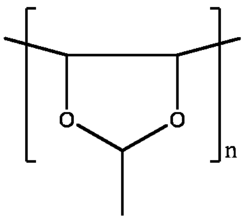
Formula (DI-3),
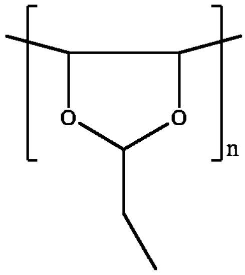
Formula (DI-4),
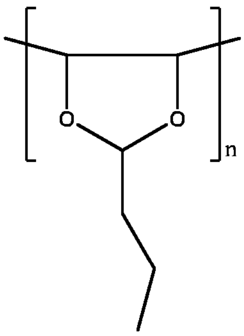
Formula (DI-5),
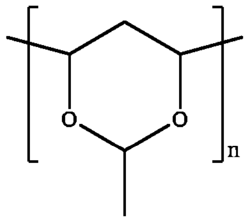
Formula (DI-6).

Exemplarily, the aldehyde-ketone polymer comprises a structural unit represented by formula (DII),

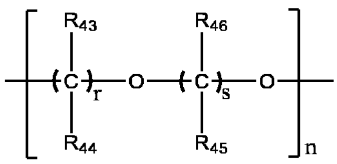
Formula (DII);

in formula (DII), $R_{43}$ to $R_{46}$ each independently comprises a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from integers in a range from 0 to 5, and at least one of r and s is selected from a positive integer. Optionally, $R_{43}$ to $R_{46}$ each independently comprises a hydrogen atom, hydroxyl, substituted or unsubstituted C1-C3 alkyl, substituted or unsubstituted C1-C2 hydroxyalkyl, or substituted or unsubstituted C1-C2 alkoxy.

In some embodiments, the aldehyde-ketone polymer comprises at least one of a structural unit represented by formula (DII-1) to a structural unit represented by formula (DII-4),

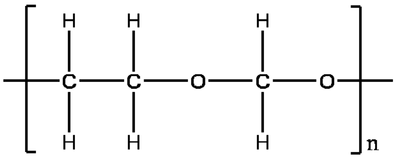 Formula (DII-1), 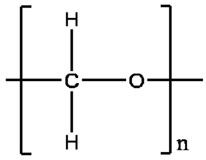 Formula (DII-2),

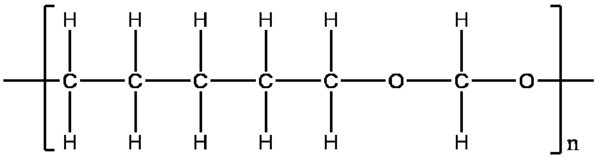 Formula (DII-3),

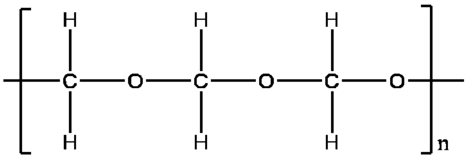 Formula (DII-4).

The molecular chains of the above aldehyde-ketone polymer have a low degree of entanglement, which is beneficial to improving the flexibility of the molecular chains. The molecular chains can be fully stretched in the electrolyte solution, which is conducive to forming the gel-state substance with the electrolyte solution.

The above polymer is only an example of structural groups of the main molecular chains. In the embodiment of the present application, the polymer may also be obtained by copolymerizing the above structural groups with other types of structural groups (such as an olefin structural unit, an enol structural unit, and an acrylonitrile structural unit).

In some embodiments, substituents may include one or more of a nitrile group (-CN), a nitro group, a sulfonic group, sulfonyl, amide, carboxyl, an ester group, and a halogen atom.

In some embodiments, n is a positive integer selected from 500 to 15000.

Optionally, n is a positive integer selected from 500 to 10000.

In some embodiments, a molecular weight of the polymer is in a range from $1.2\times10^5$g/mol to $1.0\times10^6$g/mol.

Exemplarily, the molecular weight of the polymer may be $1.2\times10^5$g/mol, $2\times10^5$g/mol, $5\times10^5$g/mol, $8\times10^5$g/mol, $1\times10^6$g/mol, $1.0\times10^6$g/mol, or a range consisting of any two of the above values.

The embodiments of the present application can further improve the use reliability and cycle performance of the battery cell when the lyophilic polymer further meets one or more of the following conditions.

In some embodiments, the lyophilic polymer is added to a first solvent at 70°C to form a polymer system; and the polymer system is left to stand at 70°C for 8 h and at 25°C for more than or equal to 24 h, after two stages of standing treatment, the polymer system is partially transformed into a gel-state substance through swelling and adsorption, and then the polymer system is filtered by means of a 200-mesh filter screen, thereby leaving a first substance. Mass of the lyophilic polymer is n, with a unit of g; mass of the first substance is m, with a unit of g; the lyophilic polymer and the first substance satisfy: $5\leq m/n\leq 1000$; optionally, $10\leq m/n\leq 1000$; and further optionally, $10\leq m/n\leq 50$. Exemplarily, m/n may be 5, 10, 20, 25, 28, 30, 32, 35, 40, 50, 80, 100, 200, 500,1000, or a range consisting of any two of the above values.

Exemplarily, based on mass of the polymer system, a ratio of a mass content of the m/n to a mass content of the first solvent ranges from 1:100 to 1:10, such as 3:50.

Exemplarily, the first solvent is the same as or similar to a solvent of the electrolyte solution, and the first solvent may include a carbonate solvent. For example, the carbonate solvent includes a cyclic carbonate solvent and/or a linear carbonate solvent.

As examples of the cyclic carbonate solvent, the cyclic carbonate solvent includes one or more of ethylene carbonate (EC), vinylene carbonate (VC), fluoroethylene carbonate (FEC), difluoroethylene carbonate (DFEC), vinylethylene carbonate (VEC), and dicaprylyl carbonate (CC).

As examples of the linear carbonate solvent, the linear carbonate solvent includes one or more of dimethyl carbonate (DMC), diethyl carbonate (DEC), ethyl methyl carbonate (EMC), diphenyl carbonate (DPC), methyl allyl carbonate (MAC), and polycarbonate (VA).

Optionally, the first solvent may further simultaneously contain a lithium salt and an electrolyte solution additive, such as lithium hexafluorophosphate, vinylene carbonate (VC), fluorovinylene carbonate (FEC), and the like.

In the present application, m/n is also referred to as a precipitation value, which characterizes a capability of the lyophilic polymer and the solvent to transform into a gel-state substance.

The first substance mainly includes a gel-state substance formed by the lyophilic polymer and the first solvent. In such gel-state substance, a molecular structure of the polymer will not change substantially.

In some embodiments, the first substance is dried at 80°C for 12 h to remove the first solvent in the first substance, and the first substance is mainly composed of the lyophilic polymer described above after drying, as determined by infrared spectrophotometry (IR) or tested by nuclear magnetic resonance (NMR).

The relevant parameters of the lyophilic polymer in the embodiment of the present application can be detected by the following method:

the groups of the lyophilic polymer in the embodiment of the present application can be detected by infrared spectrophotometry (IR). Specifically, the lyophilic polymer is tested by a Thermo Nicolet Nexus 670 attenuated total-reflection Fourier transform infrared spectrometer (FTIR-ATR), and then tested with reference to the standard GB/T6040-2002. The test range is: ATR method 600-4000 $cm^{-1}$; repeatability is: $\pm 2cm^{-1}$; resolution is: better than 4 $cm^{-1}$; and a transmission depth is 0.2-0.6$\mu$m.

The structure of the lyophilic polymer in the embodiment of the present application can be tested by nuclear magnetic resonance (NMR). Specifically, 1H NMR and 13C NMR are performed on a Varian Mercury Plus-400 nuclear magnetic resonance instrument, the test temperature is 20°C, TMS is used as the internal standard, $CDCl_3$ is used as a solvent, and a proton resonance frequency is 400 MHz.

The polymer monomer type (especially suitable for monomers that account for a relatively small proportion in the polymer) of the lyophilic polymer of the embodiment of the present application can be tested by pyrolysis-gas chromatography-mass spectrometry, and the specific test steps are as follows: 0.5 mg of sample is accurately weighed and put into a sample cup, the sample cup is fixed to a sample injection rod, and then put into a pyrolyzer installed near a gas chromatography (GC) sample injection port. After the temperature of the pyrolyzer reaches a set temperature, a sample injection button is pressed, and the sample cup quickly falls into a core of a pyrolysis furnace by free fall. In an inert gas $N_2$ atmosphere, volatile components are instantly vaporized and carried into a gas chromatography column by carrier gas for separation. Finally, the volatile components are detected by a flame ionization detector (FID) or a mass spectrometer (MS) to obtain a gas chromatogram or a total ion flow diagram.

The molecular weight of the lyophilic polymer in the embodiment of the present application has a well-known meaning in the art, and can be measured using equipment and methods commonly used in the art. The molecular weight can be tested using gel permeation chromatography (GPC). The specific testing steps are: an appropriate amount of sample to be tested (the sample concentration is sufficient to ensure 8%-12% shading) is taken, 20 ml of deionized water is added, meanwhile, ultrasound is performed for 5 minutes (53KHz/120W) to ensure that the sample is completely dispersed, and then the sample is measured according to GB/T19077-2016/ISO 13320:2009 standard.

Alternatively, the molecular weight is tested using a multi-angle laser light scatterometer (MALLS), specifically, an instrument in which a GPC is combined with a Dawn Heleos II multi-angle laser light scattering apparatus, an Optilab T-rEX refractive index (RI) detector and a Visco Star II viscometer (Wyatt Technology Corporation, USA) is used. The test is conducted at 30°, tetrahydrofuran is used as a mobile phase, and testing is conducted at a flow rate of 1.0 ml/min, and commercial software ASTRA6 is used to process SEC-SAMLL data to obtain molecular weight parameters.

[Positive electrode plate]

The positive electrode plate includes a positive electrode current collector and a positive electrode active material layer disposed on the positive electrode current collector. The positive electrode active material layer includes a positive electrode active material and a lyophilic polymer.

As an example, the positive electrode current collector has two surfaces opposite in its own thickness direction, and the positive electrode active material layer is disposed on either one or both of the two opposite surfaces of the positive electrode current collector.

The positive electrode active material layer includes a positive electrode active material, and the positive electrode active material may be a positive electrode active material for a battery cell known in the art. As an example, the positive electrode active material may include at least one of the following materials: a lithium-containing phosphate compound, a lithium-containing transition metal oxide, a sodium-containing phosphate compound, and a sodium-containing transition metal oxide.

Exemplarily, a general formula of the olivine-type phosphate active material (the lithium-containing phosphate compound) is:$Li_xA_yMe_aM_bP_{1-c}X_cY_z$, wherein $0 \le x \le 1.3$, $0 \le y \le 1.3$, and $0.9 \le x+y \le 1.3$; $0.9 \le a \le 1.5$, $0 \le b \le 0.5$, and $0.9 \le a+b \le 1.5$; $0 \le c \le 0.5$; $3 \le z \le 5$; A includes one or more of Na, K, and Mg; Me includes one or more of Mn, Fe, Co, and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X includes one or more of S, Si, Cl, B, C, and N; and Y includes one or more of O and F. Specifically, the olivine-type phosphate active material includes one or more of $LiFePO_4$, $LiMnPO_4$, $LiNiPO_4$, and $LiCoPO_4$.

Exemplarily, thelithium transition metal oxide (layered materials such as ternary, lithium/sodium nickel oxide, lithium/sodium cobalt oxide, lithium/sodium manganese oxide, lithium-rich layered and rock salt phase layered materials).

A general formula for the layered-structure positive electrode active material is: $Li_xA_yNi_aCo_bMn_cM_{(1-a-b-c)}Y_z$, wherein, 0≤x≤2.1, 0≤y≤2.1, and 0.9≤x+y≤2.1; 0≤a ≤1, 0≤b≤1, 0≤c≤ 1, and 0.1≤a+b+c≤ 1; 1.8≤z≤3.5. A includes one or more of Na, K, Mg; M includes one oe more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y includes one or more of O and F. Optionally, y=0. Specifically, the positive electrode active material of the layered structure may include one or more of lithium cobalt oxide (LCO), lithium nickel oxide (LNO), lithium manganese oxide LMO, $LiNi_{1/3}Co_{1/3}Mn_{1/3}O_2$(NCM333), $LiNi_{0.5}Co_{0.2}Mn_{0.3}O_2$(NCM523), $LiNi_{0.6}Co_{0.2}Mn_{0.2}O_2$(NCM622), $LiNi_{0.8}Co_{0.1}Mn_{0.1}O_2$(NCM811), $LiNi_{0.5}Co_{0.2}Mn_{0.3}O_2$(NCM523) and NCA.

In some embodiments, the positive electrode current collector may be a metal foil or a composite current collector. As an example of the metal foil, an aluminum foil or an aluminum alloy foil may be used. The composite current collector may include a high molecular material substrate layer and a metal material layer formed on at least one surface of the high molecular material substrate layer. As an example, the metal material may include a combination selected from one or more of aluminum, an aluminum alloy, nickel, a nickel alloy, titanium, a titanium alloy, silver, and silver alloy. The high molecular material substrate layer may include a combination selected from one or more of polypropylene (PP), polyethylene terephthalate (PET), polybutylene terephthalate (PBT), polystyrene (PS), and polyethylene (PE).

In some embodiments, the positive electrode active material layer further optionally includes a positive electrode conductive agent. In the present application, the type of the positive electrode conductive agent is not specifically limited. As an example, the positive electrode conductive agent includes a combination selected from one or more of superconducting carbon, conductive carbon black, conductive graphite, acetylene black, carbon black, Ketjen black, carbon dots, carbon nanotubes, graphene, and carbon nanofibers. In some embodiments, based on total mass of the positive electrode active material layer, a mass percentage of the positive electrode conductive agent is less than 5%.

In some embodiments, the positive electrode active material layer further optionally includes a positive electrode binder. In the present application, the type of the positive electrode binder is not specifically limited. As an example, the positive electrode binder may include a combination selected from one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin. In some embodiments, based on total mass of the positive electrode active material layer, a mass percentage of the positive electrode binder is less than 5%. Compared with crystallinity of the fluorinated polymer according to the present application, crystallinity of the positive electrode binder is higher. Compared with a melting temperature of the fluorinated polymer according to the present application, a melting temperature of the positive electrode binder is higher.

The positive electrode active material layer is usually formed by coating a positive electrode slurry on the positive electrode current collector, followed by drying and cold pressing. The positive electrode slurry is generally formed by dispersing the positive electrode active material, the lyophilic polymer, the optional conductive agent, the optional binder and any other components in a solvent and sufficiently stirring the mixture. The solvent may be N-methyl pyrrolidone (NMP), but is not limited thereto. Of course, the preparation of the positive electrode plate is not limited to the above method, and the preparation method described above can also be used.

[Negative electrode plate]

In some embodiments, the negative electrode plate includes a negative electrode current collector and a negative electrode active material layer disposed on at least one surface of the negative electrode current collector and including a negative electrode active material. For example, the negative electrode current collector has two surfaces opposite in its own thickness direction, and the negative electrode active material layer is disposed on either one or both of the two opposite surfaces of the negative electrode current collector.

The negative electrode active material may be a negative electrode active material for a battery cell known in the art. As an example, the negative electrode active material may include, but not limited to, at least one of natural graphite, artificial graphite, soft carbon, hard carbon, a silicon-based material, a tin-based material, lithium titanium oxide, lithium metal, sodium metal, and a lithium alloy. The silicon-based material may include at least one of elemental silicon, a silicon oxide, a silicon-carbon composite, a silicon-nitrogen composite, and a silicon alloy material. The tin-based material may include at least one of elemental tin, a tin oxide, and a tin alloy material.

In some embodiments, the negative electrode active material layer further optionally includes a negative electrode conductive agent. In the present application, the type of the negative electrode conductive agent is not specifically limited. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on total mass of the negative electrode active material layer, a mass percentage of the negative electrode conductive agent is less than or equal to 5%.

In some embodiments, the negative electrode active material layer further optionally includes a negative electrode binder. In the present application, the type of the negative electrode binder is not specifically limited. As an

example, the negative electrode binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS). In some embodiments, based on total mass of the negative electrode active material layer, a mass percentage of the negative electrode binder is less than or equal to 5%.

In some embodiments, the negative electrode active material layer further optionally includes other auxiliaries. As an example, the other auxiliaries may include a thickener, such as, carboxymethyl cellulose sodium (CMC), and a PTC thermistor material. In some embodiments, based on total mass of the negative electrode active material layer, a mass percentage of other auxiliaries is less than or equal to 2%.

In some embodiments, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The negative electrode active material layer is usually formed by coating a negative electrode slurry on the negative electrode current collector, followed by drying and cold pressing. The negative electrode slurry is generally formed by dispersing the negative electrode active material, the lyophilic polymer, the optional conductive agent, the optional binder and other optional auxiliaries in a solvent and sufficiently stirring the mixture. The solvent may be N-methyl pyrrolidone (NMP) or deionized water, but is not limited thereto. Of course, the preparation of the negative electrode plate is not limited to the above method, and the preparation method described above can also be used.

The negative electrode plate does not exclude other additional functional layers other than the negative electrode active material layer. For example, in some embodiments, the negative electrode plate in the present application further includes a conductive primer coating (e.g., composed of a conductive agent and a binder) sandwiched between the negative electrode current collector and the negative electrode active material layer and disposed on a surface of the negative electrode current collector. In some other embodiments, the negative electrode plate of the present application further includes a protective layer covering a surface of the negative electrode active material layer.

[Separator]

The separator includes a substrate and a coating disposed on at least one surface of the substrate.

As some examples, the substrate is generally of a porous structure, the porous structure has pores, and the lyophilic polymer may be distributed at pores of the substrate.

As some other examples, the lyophilic polymer may be distributed in the coating.

As further examples, the lyophilic polymer may be disposed on a surface of the coating facing away from the substrate.

The specific distribution position of the lyophilic polymer may be any one of the above three forms, may also be any two forms, and may also be a combination of the above three positions.

The embodiment of the present application has no particular restrictions on a material of the substrate, and any known substrate with good chemical stability and mechanical stability can be selected, such as at least one of glass fiber, nonwoven fabric, polyethylene, polypropylene, and polyvinylidene fluoride. The substrate may be a single-layer film or a multi-layer composite film. When the substrate is the multi-layer composite film, materials of the layers may be the same or different. The substrate is generally of a porous structure, the porous structure has pores, and the lyophilic polymer may be distributed at pores of the substrate.

In some embodiments, the coating may further include a filler. Further, the filler may include at least one of inorganic particles and organic particles. The lyophilic polymer may be distributed in the coating.

In some embodiments, the lyophilic polymer may be disposed on a surface of the coating facing away from the substrate.

In some embodiments, a decomposition temperature of the filler may be more than 200°C, whereby the filler can have characteristics of good thermal stability and resistance to decomposition, thereby further improving the heat resistance of the separator.

The inorganic particles have the characteristics of high thermal stability and resistance to decomposition. Optionally, the inorganic particles include at least one of inorganic particles having a dielectric constant of 5 or more, inorganic particles having ion conductivity but not storing ions, and inorganic particles capable of undergoing electrochemical reactions.

Optionally, the inorganic particles having the dielectric constant of 5 or more include at least one of boehmite, aluminum oxide, zinc oxide, silicon oxide, titanium oxide, zirconium oxide, barium oxide, calcium oxide, magnesium oxide,

nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, magnesium lithium silicate, magnesium sodium silicate, bentonite, hectorite, zirconium titanate, barium titanate, $Pb(Zr, Ti)O_3$ (PZT for short), $Pb_{1-m}La_mZr_{1-n}Ti_nO_3$ (PLZT for short, $0<m<1$, $0<n<1$), $Pb(Mg_3Nb_{2/3})O_3-PbTiO_3$ (PMN-PT for short), and respective modified inorganic particles thereof. Optionally, the inorganic particles may be modified by chemical modification and/or physical modification. The chemical modification methods include coupling agent modification (e. g., using silane coupling agents, titanate coupling agents, etc.), surfactant modification, polymer grafting modification, etc. The physical modification methods may include mechanical dispersion, ultrasonic dispersion, high-energy treatment, and the like. Through modification treatment, the agglomeration of the inorganic particles can be reduced, thereby enabling the inorganic particles to form a more stable and uniform spatial network structure with nanocellulose. Additionally, by selecting coupling agents, surface active materials, or polymers with specific functional groups to modify the inorganic particles, it can also help improve the soaking characteristics of the coating on the electrolyte solution and enhance the bonding strength between the coating and the substrate.

Optionally, the inorganic particles having the ion conductivity but not storing the ions include at least one of $Li_3PO_4$, lithium titanium phosphate $Li_{x1}Ti_{y1}(PO_4)_3$, lithium titanium aluminum phosphate $Li_{x2}Al_{y2}Ti_{z1}(PO_4)_3$, (LiAlTiP) $x_3O_{y3}$ glass, lithium lanthanum titanate $Li_{x4}La_{y4}TiO_3$, lithium germanium thiophosphate $Li_{x5}Ge_{y5}P_{z2}S_w$, lithium nitride $Li_{x6}N_{y6}$, $SiS_2$ glass $Li_{x7}Si_{y7}S_{z3}$, and $P_2S_5$ glass $Li_{x8}P_{y8}S_{z4}$, where $0<x1<2$, $0<y1<3$, $0<x2<2$, $0<y2<1$, $0<z1<3$, $0<x3<4$, $0<y3<13$, $0<x4<2$, $0<y4<3$, $0<x5<4$, $0<y5<1$, $0<z2<1$, $0<w<5$, $0<x6<4$, $0<y6<2$, $0<x7<3$, $0<y7<2$, $0<z3<4$, $0<x8<3$, $0<y8<3$, $0<z4<7$. This can further improve the ion transport property of the separator.

The organic particles have the characteristics of good thermal stability and resistance to decomposition, thereby improving the heat resistance of the separator. Meanwhile, when the internal temperature of the battery cell reaches the melting point of the organic particles due to overcharge, abuse, etc., the organic particles can also be melted, and are sucked into micropores of the substrate due to capillary action to play roles of closing pores and circuit breaking, thereby being beneficial to ensuring the high safety performance of the battery cell.

In some embodiments, the organic particles include but are not limited to polyethylene particles, polypropylene particles, polystyrene particles, melamine resin particles, phenolic resin particles, polyester particles (such as polyethylene terephthalate, polyethylene naphthalate, polybutylene terephthalate), polyimide particles, polyamide imide particles, polyarylamide particles, polyphenylene sulfide particles, polysulfone particles, polyetheretherketone particles, polyaryletherketone particles, and a copolymer of butyl acrylate and ethyl methacrylate (such as a crosslinked polymer of butyl acrylate and ethyl methacrylate).

In some embodiments, the coating further includes a binder. The type of the binder is not particularly limited in the present application, and any known material with good bonding property can be selected. As an example, the binder includes at least one of aqueous solution type acrylic resin (eg, a homopolymer of acrylic acid, methacrylic acid, sodium acrylate monomer or a copolymer with other comonomers), polyvinyl alcohol, an isobutylene-maleic anhydride copolymer and polyacrylamide.

Optionally, a content of the binder in the coating is less than 30%, based on the mass of the coating.

[Electrolyte solution]

During charging and discharging of the battery cell, active ions are intercalated and deintercalated back and forth between the positive electrode plate and the negative electrode plate, and the electrolyte solution plays a role in conducting active ions between the positive electrode plate and the negative electrode plate. The present application has no specific limitation on a type of the electrolyte solution, which can be selected according to actual requirements.

The electrolyte solution includes an electrolyte salt and a solvent. Types of the electrolyte salt and the solvent are not specifically limited, and may be selected according to actual requirements.

When the battery cell of the present application is a lithium-ion battery, as an example, the electrolyte salt may include, but is not limited to at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO_2F_2$), lithium difluoro bis(oxalato)phosphate (LiDFOP), and lithium tetrafluoro(oxalato)phosphate (LiTFOP).

When the battery cell of the present application is a sodium-ion battery, as an example, the electrolyte salt may include, but is not limited to at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium difluorosulfonylimide (NaFSI), sodium bis trifluoromethanesulfonimide (NaTFSI), sodium trifluoromethanesulfonate (NaTFS), sodium difluorooxalate borate (NaDFOB), sodium difluorooxalate borate (NaBOB), sodium difluorophosphate ($NaPO_2F_2$), sodium difluorooxalate phosphate (NaDFOP), and sodium tetrafluorooxalate phosphate (NaTFOP).

As an example, the solvent may include, but is not limited to at least one of ethylene carbonate (EC), propylene

carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethylsulfonylethane (ESE).

In some embodiments, the electrolyte solution further optionally includes an additive. For example, the additive may include a negative electrode film-forming additive, or may include a positive electrode film-forming additive, and may further include an additive capable of improving certain performance of a battery, such as an additive for improving overcharging performance of the battery, an additive for improving high temperature performance of the battery, an additive for improving low temperature performance of the battery, etc.

In some embodiments, the positive electrode plate, the separator, and the negative electrode plate may be made into the electrode assembly by a winding process and/or a stacking process.

In some embodiments, the battery cell may includes an outer package. The outer package may be used to encapsulate the above electrode assembly and electrolyte solution.

In some embodiments, the outer package of the battery cell may be a hard shell, such as a hard plastic shell, an aluminum shell, and a steel shell. The outer package of the battery cell may also be a soft package, such as a bag-type soft package. A material of the soft package may be plastic, such as at least one of polypropylene (PP), polybutylene terephthalate (PBT), and polybutylene succinate (PBS).

In some embodiments, the positive electrode plate, the separator, and the negative electrode plate may be made into the electrode assembly by the winding process or the stacking process.

A shape of the battery cell is not particularly limited in the present application, and the battery cell may be a cylinder, a square, or any other shape. For example, FIG. 1 is a battery cell 5 in a square structure as an example.

In some embodiments, as shown in FIG. 1 and FIG. 2, the outer package may include a housing 51 and a cover plate 53. The housing 51 may include a bottom plate and a side plate connected to the bottom plate, and the bottom plate and the side plate enclose to form an accommodating cavity. The housing 51 has an opening in communication with the accommodating cavity, and the cover plate 53 is configured to cover an opening to close the accommodating cavity. The positive electrode plate, the negative electrode plate, and the separator may be formed into an electrode assembly 52 by a winding process or a stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. In some embodiments, the positive electrode plate, the separator, the negative electrode plate, and the electrolyte solution may be assembled to form the battery cell. As an example, the positive electrode plate, the separator, and the negative electrode plate may form the electrode assembly by a winding process and/or a stacking process; the electrode assembly is placed in the outer package; the electrolyte solution is poured in after drying; and the battery cell is obtained through processes such as vacuum encapsulation, standing, formation, and shaping.

In some embodiments of the present application, the battery cell according to the present application can be assembled into a battery module, the number of battery cells included in the battery module can be multiple, and the specific number may be adjusted according to the application and capacity of the battery module.

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the above battery module may further be assembled into a battery pack, and the number of the battery modules included in the battery pack may be adjusted according to the application and capacity of the battery pack.

Both the battery module 4 and the battery pack may be used as specific examples of batteries in the present application.

FIG. 4 and FIG. 5 are schematic views of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3, where the upper box body 2 is configured to cover the lower box body 3 to form an enclosed space for accommodating the battery modules 4. The plurality of battery modules 4 may be arranged in the battery box in any manner.

## Electrical apparatus

In a second aspect, the present application provides an electrical apparatus, and the electrical apparatus

includes at least one of a battery cell, a battery module, or a battery pack of the present application. The battery cell, the battery module, and the battery pack may be used as a power source of the electrical apparatus, or may be used as an energy storage unit of the electrical apparatus. The electrical apparatus may be, but is not limited to, mobile equipment (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc. In some embodiments, the battery cell includes a solution injection hole, and the liquid injection hole is used to inject an electrolyte solution; when the battery cell is applied to the electrical apparatus, the solution injection hole is located at a bottom of the battery cell in a vertical direction. Since the amount of free electrolyte solution in the battery cell is very small or even there is no free electrolyte solution, when the solution injection hole is disposed at the bottom of the battery cell in the vertical direction, the use reliability of the battery cell can also be improved, thereby improving the use reliability of the electrical apparatus.

The electrical apparatus may select the battery cell, the battery module, or the battery pack according to use requirements thereof. FIG. 6 is a schematic view of an electrical apparatus as an example. The electrical apparatus 6 is an all-electric vehicle, a hybrid electric vehicle, a plug-in hybrid electric vehicle, or the like. In order to meet the requirements of the electrical apparatus for high power and high energy density, the battery pack 1 or a battery module may be used. As another example, the electrical apparatus may be a mobile phone, a tablet personal computer, a laptop, etc. The electrical apparatus is generally required to be thin and light, and may use a battery cell as a power source.

## Example

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Reagents or instruments used without specifying the manufacturers are conventional products that can be purchased form the market.

### Example 1 Preparation of lithium-ion battery

(1) Preparation of positive electrode plate:

An aluminum foil with a thickness of 12 μm is used as a positive electrode current collector.

A lyophilic polymer, a positive electrode active material $LiNi_{0.8}Co_{0.1}Mn_{0.1}O_2$(NCM811), a conductive agent carbon black, and a binder polyvinylidene fluoride (PVDF) are added into N-methyl pyrrolidone (NMP) and mixed to be prepared into a positive electrode slurry. A mass ratio of the lyophilic polymer, NCM811, the conductive carbon black, PVDF and N-methyl pyrrolidone (NMP) in the positive electrode slurry is 0.5:96.8:2.2:0.5. The positive electrode slurry is coated on a current collector aluminum foil, dried at 85°C, then cold pressed, then subjected to edge cutting, slicing, and striping, and then dried at 85°C under vacuum for 4 h, to prepare the positive electrode plate.

(2) Preparation of negative electrode plate:

A copper foil with a thickness of 8 μm is used as a negative electrode current collector.

A lyophilic polymer, a negative electrode active material artificial graphite, a conductive agent carbon black, a binder styrene butadiene rubber (SBR), and a thickener sodium carboxymethylcellulose (CMC-Na) are added into deionized water at a weight ratio of 2.5:94.9:2:0.5:0.1, and then are uniformly mixed, so as to prepare a negative electrode slurry. The negative electrode slurry is coated on a current collector copper foil, dried at 85°C, then subjected to cold pressing, edge cutting, slicing, and striping, and then dried at 120°C under vacuum for 12 h, to prepare the positive electrode plate.

(3) Preparation of electrolyte solution:

in an environment with a water content of less than 10 ppm, non-aqueous organic solvents ethylene carbonate (EC), and ethyl methyl carbonate (EMC) are mixed at a volume ratio of 3:7 to obtain a solvent of an electrolyte solution, and then lithium salt $LiPF_6$ and the mixed solvent are mixed to prepare an electrolyte solution with a lithium salt concentration of 1 mol/L.

(4) Preparation of lithium-ion battery:

A polyethylene(PE) film of 16 μm is used as the substrate of the separator, and a polymer coating is coated on the

surface of the substrate. The mass contents of the conventional polyvinylidene fluoride (PVDF) and the binder styrene butadiene rubber (SBR) in the polymer coating are 85%:15%, respectively.

The positive electrode plate, the separator, and the negative electrode plate mentioned above are stacked in order, so that the separator is positioned between the positive electrode plate and the negative electrode plate to play a separating role, and then winding is performed so that an electrode assembly is obtained; the electrode assembly is put into an outer package shell, and after drying, the electrolyte solution is injected thereto; and the lithium-ion battery is obtained through processes such as vacuum encapsulation, standing, formation, and shaping.

Comparative Example 1

A lithium-ion battery is prepared by a method similar to that of Example 1. The difference from Example 1 is that in Comparative Example 1, a lyophilic polymer is not added in a positive electrode slurry, and a lyophilic polymer is not added in a negative electrode slurry.

Example 2-1 to Example 2-6

A lithium-ion battery is prepared by a method similar to that of Example 1. The difference from Example 1 is that at least one of the type of at least one of a total pore volume of a positive electrode plate, a total pore volume of a negative electrode plate, the addition amount of a lyophilic polymer in a positive electrode slurry, and the addition amount of a lyophilic polymer in a negative electrode slurry is adjusted in Example 2-1 to Example 2-6.

Example 3-1 to Example 3-4

A lithium-ion battery is prepared by a method similar to that of Example 1. The difference from Example 1 is that the type of a lyophilic polymer is adjusted in Example 3-1 to Example 3-4.

Embodiment 4-1 to Embodiment 4-3

A lithium-ion battery is prepared by a method similar to that of Example 1. The difference from Example 1 is that a disposing position of a lyophilic polymer is adjusted in Example 4-1 to Example 4-3, wherein in Example 4-3, a mass content of polycarbosilane (PCS) is 80%, a mass content of the lyophilic polymer is 10%, and a mass content of a binder is 10%.

**Data of examples and comparative examples are as shown in Table 1.**

**Tested parts**

1. Test of cycle performance of lithium-ion battery

The above lithium-ion battery prepared in the examples and comparative examples are charged at a 1C rate and discharged at a 1C rate at 25±2°C for a full charge-discharge cycle test until a capacity of the secondary battery is decayed to 80% of an initial capacity, test is stopped, and the number of cycles is recorded.

2. Liquid leakage insulation test of lithium-ion battery module

The above lithium-ion battery prepared in the examples and comparative examples are charged to 100%SOC at 0.5C at 25±2°C (i.e., a current at 0.5 times capacity rate) and left standing for 1 h. A small hole with a diameter of 2 mm is drilled at a bottom of the cell to simulate a liquid leakage scenario of the cell. 12 battery cells are connected in series into a group, one end of the module is connected to a negative electrode of the module, the other end of the module is half overlapped/overlapped with an end plate, and is externally connected with a voltage of 200V, observation is performed for 1 h (if a fire occurs, a short-circuit machine is disconnected) to confirm whether there is insulation failure and the time of the fire.

**Table 1**

| Item | Lyophilic polymer | | | | | | Positive electrode plate | | Negative electrode plate | | Separator | |
|---|---|---|---|---|---|---|---|---|---|---|---|---|
| | Monomer | Crystallinity $X_c$% | Melting temperature Tm(°C) | Molecular weight | Glass transition temperature Tg (°C) | Slope K | Addition amount of lyophilic polymer | p1*v1 (mL) | Addition amount of lyophilic polymer | p2*v2 (mL) | Addition amount of lyophilic polymer | p3*v3 (mL) |
| Comparative Example 1 | / | / | / | 800000 | / | / | 0 | 56 | 0 | 160 | 0 | 55 |
| Example 1 | 80%VDF+15% HFP+5%TFE | 25% | 135 | 600000 | 35 | / | 0.5% | 56 | 2.5% | 160 | 0 | 55 |
| Example 2-1 | 80%VDF+15% HFP+5%TFE | 25% | 135 | 600000 | 35 | / | 1.8% | 56 | 2.6% | 160 | 0 | 55 |
| Example 2-2 | 80%VDF+15% HFP+5%TFE | 25% | 135 | 600000 | 35 | / | 1.5% | 55 | 2.0% | 162 | 0 | 55 |
| Example 2-3 | 80%VDF+15% HFP+5%TFE | 25% | 135 | 600000 | 35 | / | 0.4% | 57 | 2.1% | 158 | 0 | 55 |
| Example 2-4 | 80%VDF+15% HFP+5%TFE | 25% | 135 | 600000 | 35 | / | 0.4% | 55 | 2.0% | 160 | 0 | 55 |
| Example 2-5 | 80%VDF+15% HFP+5%TFE | 25% | 135 | 600000 | 35 | / | 1.4% | 54 | 2.5% | 163 | 0 | 55 |
| Example 2-6 | 80%VDF+15% HFP+5%TFE | 25% | 135 | 600000 | 35 | / | 2.3% | 58 | 1.5% | 157 | 0 | 55 |
| Example 3-1 | 75%VDF+25% HFP | 11% | 112 | 650000 | -65 | / | 0.5% | 56 | 2.5% | 160 | 0 | 55 |
| Example 3-2 | 80% ethylene oxide +20% 2-ethyl ester ethylene oxide | / | / | 250000 | -45 | 1.2 | 0.50% | 56 | 2.5% | 160 | 0 | 55 |
| Example 3-3 | 60% methyl methacrylate+3 5% butyl acrylate+5% acrylonitrile | / | / | 350000 | -10 | 1.1 | 0.50% | 56 | 2.5% | 160 | 0 | 55 |

(continued)

| Item | Lyophilic polymer | | | | | | Positive electrode plate | | Negative electrode plate | | Separator | |
|---|---|---|---|---|---|---|---|---|---|---|---|---|
| | Monomer | Crystallinity $X_c$% | Melting temperature Tm(°C) | Molecular weight | Glass transitio n temperature Tg (°C) | Slope K | Addition amount of lyophilic polymer | p1*v1 (mL) | Addition amount of lyophilic polymer | p2*v2 (mL) | Addition amount of lyophilic polymer | p3*v3 (mL) |
| Example 3-4 | 30% polyvinyl alcohol (PVA)+70% formaldehyde | / | / | 200000 | 28 | 0.8 | 0.50% | 56 | 2.5% | 160 | 0 | 55 |
| Example 4-1 | 80%VDF+15% HFP+5%TFE | 25% | 135 | 600000 | 35 | / | 0.50% | 56 | 0 | 160 | 0 | 55 |
| Example 4-2 | 80%VDF+15% HFP+5%TFE | 25% | 135 | 600000 | 35 | / | 0 | 56 | 2.50% | 160 | 0 | 55 |
| Example 4-3 | 80%VDF+15% HFP+5%TFE | 25% | 135 | 600000 | 35 | / | 0 | 56 | 0 | 160 | 10% | 55 |

In Table 1, VDF represents vinylidene fluoride, HFP represents hexafluoropropylene, and TFE represents tetrafluoroethylene. 80%VDF+15%HFP+5%TFE indicates that based on the total mass of all monomers, a mass percentage of VDF is 80%, a mass percentage of HFP is 15%, and a mass percentage of TFE is 5%.

The nominal capacity x of the battery in the example and the comparative example is 151 Ah.

Table 2

| Item | Battery parameter | | | | | Battery performance | |
|---|---|---|---|---|---|---|---|
| | Mass y(g) of free electrolyte solution | Mass b(mg/Ah) o f free electrolyte per unit capacity | Mass difference m1-m2(g) of electrode assembly before and after drying | y/(p1*v1+ p2*v2+p3 *v3) | (y+m1-m2)/(p1*v1 +p2*v2+p3 *v3) | 25°C cycle 1C/1C @80%SOH | Module liquid leakage insulation failure time |
| Comparative Example 1 | 65.00 | 430.5 | 290.2 | 23.99% | 131.1% | 1000 | 1s |
| Example 1 | 7.00 | 46.4 | 348.2 | 2.58% | 131.1% | 1400 | 5s |
| Example 2-1 | 0.05 | 0.3 | 348.3 | 0.02% | 128.5% | 1350 | 2h |
| Example 2-2 | 0.15 | 1.0 | 348.5 | 0.06% | 128.2% | 1340 | 1h |
| Example 2-3 | 15.00 | 99.3 | 348.1 | 5.56% | 134.5% | 1260 | 2s |
| Example 2-4 | 25.00 | 165.6 | 348.6 | 9.26% | 138.4% | 1350 | 2s |
| Example 2-5 | 0.2 | 1.3 | 348.5 | 0.07% | 128.2% | 1300 | 40 min |
| Example 2-6 | 2.00 | 13.2 | 348.4 | 0.74% | 129.8% | 1310 | 30s |
| Example 3-1 | 0.5 | 3.3 | 351.2 | 0.18% | 131.1% | 1395 | 30 min |
| Example 3-2 | 2.00 | 13.2 | 349.2 | 0.74% | 131.1% | 1280 | 30s |
| Example 3-3 | 4.50 | 29.8 | 350.7 | 1.66% | 131.1% | 1260 | 8s |
| Example 3-4 | 3.00 | 19.9 | 347.2 | 1.11% | 131.1% | 1190 | 10s |
| Example 4-1 | 31.00 | 205.3 | 314.2 | 11.44% | 131.1% | 1180 | 2s |
| Example 4-2 | 2.00 | 13.2 | 346.2 | 0.74% | 131.1% | 1460 | 30s |
| Example 4-3 | 13.00 | 86.1 | 342.2 | 4.80% | 131.1% | 1260 | 3s |

According to Table 1 and Table 2, it can be seen that the lyophilic polymer is not added in the positive electrode plate and the negative electrode plate of Comparative Example 1. During the cycle process of the lithium-ion battery, due to the volume change of the lithium-ion battery, the electrolyte solution in the electrode assembly may be extruded, resulting in a problem of liquid shortage, thereby increasing the risk of occurrence of lithium dendrite, and deteriorating the use reliability and cycle performance of the lithium-ion battery.

In the examples of the present application, by adding the lyophilic polymer to at least one of the positive electrode plate, the negative electrode plate, and the separator, the lyophilic polymer can form a condensed electrolyte with the electrolyte solution, thereby improving the liquid retaining capability, and improving the use reliability and the cycle performance of the lithium-ion battery.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery cell, comprising an electrode assembly and an electrolyte, wherein the electrode assembly comprises a first electrode plate, a second electrode plate, and a separator, the first electrode plate and the second electrode plate have opposite polarities, the separator is disposed between the first electrode plate and the second electrode plate, at least one of the first electrode plate, the second electrode plate, and the separator comprises a lyophilic polymer, and the battery cell satisfies the following formula:

$$0 \leq \frac{y}{(p1*v1+p2*v2+p3*v3)} \leq 23\%;$$

and

p1 represents a porosity of the first electrode plate;
v1 represents a total volume of the first electrode plate, with a unit of $\mu m^3$;
p2 represents a porosity of the second electrode plate; and
v2 represents a total volume of the second electrode plate, with a unit of $\mu m^3$;
p3 represents a porosity of the separator;
v3 represents a total volume of the separator, with a unit of $\mu m^3$; and
y represents mass of a free electrolyte solution in the battery cell, with a unit of g.

2. The battery cell according to claim 1, wherein

$$0.01\% \leq \frac{y}{(p1*v1+p2*v2+p3*v3)} \leq 20\%.$$

3. The battery cell according to claim 1 or 2, wherein the battery cell further satisfies the following formula:

$$100\% \leq \frac{y+m_1-m_2}{(p1*v1+p2*v2+p3*v3)} \leq 200\%;$$

and

optionally,

$$120\% \leq \frac{y+m_1-m_2}{(p1*v1+p2*v2+p3*v3)} \leq 160\%;$$

further optionally,

$$130\% \leq \frac{y+m_1-m_2}{(p1*v1+p2*v2+p3*v3)} \leq 140\%;$$

$m_1$ represents mass of the electrode assembly before drying, with a unit of g; and
$m_2$ represents mass of the electrode assembly after drying, with a unit of g.

4. The battery cell according to any one of claims 1 to 3, wherein

the amount of a free electrolyte solution per unit capacity of the battery cell is b, with a unit of mg/Ah, and $0 \leq b \leq 1400$;
optionally, $0.1 \leq b \leq 1000$; and further optionally, $0.3 \leq b \leq 800$.

5. The battery cell according to any one of claims 1 to 4, wherein the first electrode plate comprises a current collector and an active material layer disposed on at least one surface of the current collector, and the active material layer comprises a lyophilic polymer and active material particles;

the lyophilic polymer is distributed on surfaces of the active material particles; and/or
a plurality of active material particles are provided, a pore exists between every two adjacent active material particles, and the lyophilic polymer is distributed at the pore between the active material particles.

**6.** The battery cell according to any one of claims 1 to 5, wherein the separator comprises a substrate and a coating disposed on at least one surface of the substrate;

the lyophilic polymer is distributed at pores of the substrate; and/or
the lyophilic polymer is distributed in the coating; and/or
the lyophilic polymer is disposed on a surface of the coating facing away from the substrate.

**7.** The battery cell according to any one of claims 1 to 6, wherein the lyophilic polymer comprises a fluorinated polymer;

crystallinity of the fluorinated polymer measured by differential scanning calorimetry is $Xc_1$, $0<Xc_1\leq 30\%$; and a melting temperature of the fluorinated polymer is $T_{m1}$, with a unit of °C, and $0<T_{m1}\leq 140$.

**8.** The battery cell according to claim 7, wherein a glass transition temperature of the fluorinated polymer is $T_{g1}$, with a unit of °C, and $-150\leq T_{g1}\leq 60$.

**9.** The battery cell according to claim 7 or 8, wherein the fluorinated polymer comprises at least one of a structural unit represented by formula (AI) and a structural unit represented by formula (AIII),

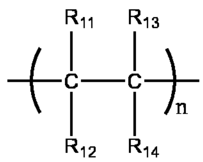 Formula (AI), 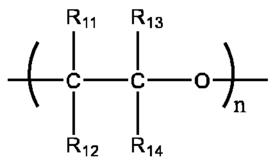 Formula (AII)

in formula (AI) and formula (AII), $R_{11}$, $R_{12}$, $R_{13}$ and $R_{14}$ each independently comprises a hydrogen atom, a fluorine atom, a chlorine atom, substituted or unsubstituted C1-C3 alkyl, or substituted or unsubstituted C1-C3 alkoxy, and at least one of $R_{11}$, $R_{12}$, $R_{13}$ and $R_{14}$ comprises a fluorine atom; when substituted, substituents comprise one or more of a nitrile group (-CN), a nitro group, a sulfonic group, sulfonyl, amide, carboxyl, an ester group, and a halogen atom;

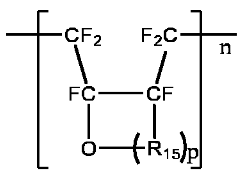 Formula (AIII);

in formula (AIII), $R_{15}$ comprises a single bond, and substituted or unsubstituted C1-C3 alkyl; when substituted, the substituents comprise one or more of a nitrile group (-CN), a nitro group, a sulfonic group, sulfonyl, amide, carboxyl, an ester group, and a halogen atom; p is selected from positive integers from 1 to 3; and n is selected from positive integers from 1000 to 30000.

**10.** The battery cell according to any one of claims 1 to 9, wherein the lyophilic polymer comprises an ether polymer, and the ether polymer is made into a sheet-like structural body; the sheet-like structural body is subjected to dynamic frequency scanning test at $(T_{m2}+20)$°C to obtain an elastic modulus G'-loss modulus G" curve through, a slope of the elastic modulus G'-loss modulus G" curve is $K_1$, wherein $1<K_1<\infty$, and $T_{m2}$°C represents a melting temperature of the ether polymer; optionally, $1<K_1\leq 100$; and further optionally, $1<K_1\leq 10$.

**11.** The battery cell according to claim 10, wherein the ether polymer comprises a structural unit represented by formula (BI) and/or a structural unit represented by formula (BII),

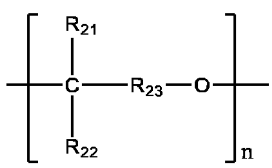 Formula (BI);

in formula (BI), $R_{21}$ and $R_{22}$ each independently comprises a hydrogen atom, substituted or unsubstituted C1-C3 alkyl, or substituted or unsubstituted C1-C3 alkoxy; and $R_{23}$ comprises substituted or unsubstituted C1-C5 alkylene,

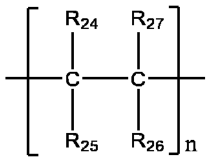 Formula (BII);

in formula (BII), $R_{24}$ to $R_{27}$ each independently comprises a hydrogen atom, substituted or unsubstituted C1-C3 alkyl, substituted or unsubstituted C1-C3 alkoxy or an ether group, and at least one of $R_{24}$ to $R_{27}$ comprises substituted or unsubstituted C1-C3 alkoxy or an ether group.

**12.** The battery cell according to any one of claims 1 to 11, wherein the lyophilic polymer comprises an ester polymer, and the ester polymer is made into a sheet-like structural body; the sheet-like structural body is subjected to dynamic frequency scanning test at $(T_{m3}+20)$°C to obtain an elastic modulus G'-loss modulus G" curve, a slope of the elastic modulus G'-loss modulus G" curve is $K_2$, wherein $1<K_2<\infty$, and $T_{m3}$°C represents a melting temperature of the ester polymer, optionally, $1<K_2\leq 100$; and further optionally, $1<K_2\leq 10$.

**13.** The battery cell according to claim 12, wherein the ester polymer comprises a structural unit represented by formula (CI) and/or a structural unit represented by formula (CII),

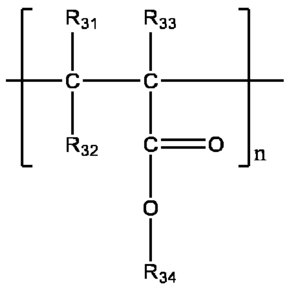 Formula (CI);

in formula (CI), $R_{31}$, $R_{32}$ and $R_{33}$ each independently comprises a hydrogen atom or substituted or unsubstituted C1-C8 alkyl, and $R_{34}$ comprises substituted or unsubstituted C1-C8 alkyl, or substituted or unsubstituted C1-C8 hydroxyalkyl,

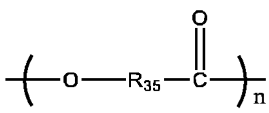 Formula (CII);

in formula (CII), $R_{35}$ comprises substituted or unsubstituted C2-C6 methylene; and optionally, $R_{35}$ each independently comprises substituted or unsubstituted C2-C4 methylene.

**14.** The battery cell according to any one of claims 1 to 13, wherein the lyophilic polymer comprises an aldehyde-ketone polymer, and the aldehyde-ketone polymer is made into a sheet-like structural body; the sheet-like structural body is subjected to dynamic frequency scanning test at $(T_{m4}+20)$°C to obtain an elastic modulus G'-loss modulus G" curve, a slope of the elastic modulus G'-loss modulus G" curve is $K_3$, wherein $0.8\leq K_3<\infty$, and $T_{m4}$°C represents a melting temperature of the aldehyde-ketone polymer; optionally, $0.8\leq K_3\leq 100$; and further optionally, $0.8\leq K_3\leq 10$.

**15.** The battery cell according to claim 14, wherein the aldehyde-ketone polymer comprises a structural unit represented by formula (DI) and/or a structural unit represented by formula (DII),

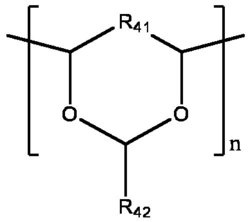

Formula (DI);

in formula (DI), $R_{41}$ comprises a single bond, and substituted or unsubstituted C1-C6 methylene; and $R_{42}$ comprises a hydrogen atom, and substituted or unsubstituted C1-C6 alkyl;

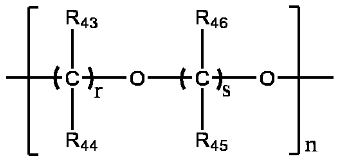

Formula (DII);

in formula (DII), $R_{43}$ to $R_{46}$ each independently comprises a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from an integer in a range from 0 to 5, and at least one of r and s is selected from a positive integer.

**16.** The battery cell according to any one of claims 1 to 15, wherein a molecular weight of the lyophilic polymer is in a range from $1.2 \times 10^5$g/mol to $1 \times 10^6$g/mol.

**17.** A battery, comprising the battery cell according to any one of claims 1 to 16.

**18.** An electrical apparatus, comprising the battery according to claim 17.

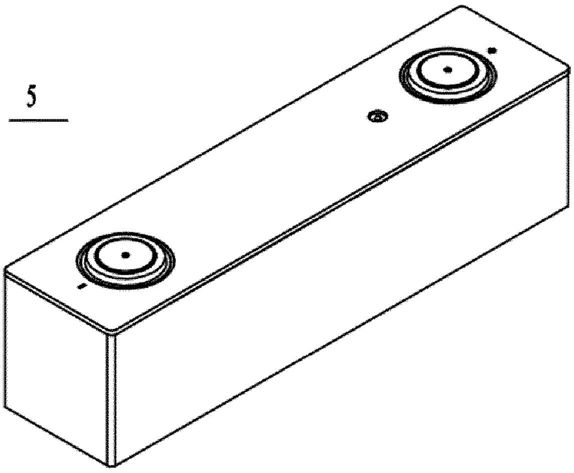


FIG. 1

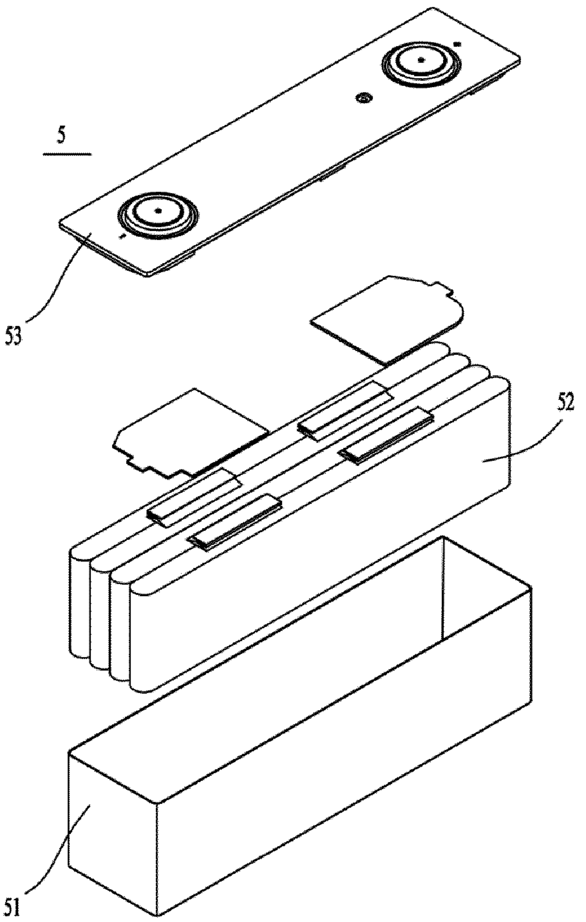


FIG. 2

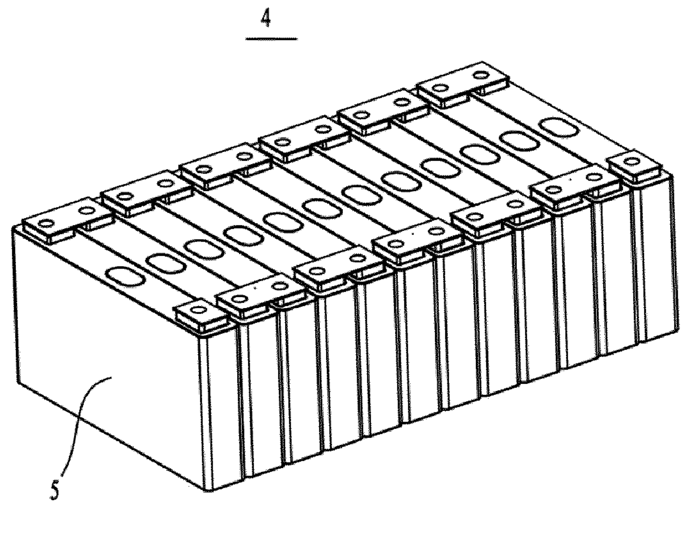


FIG. 3

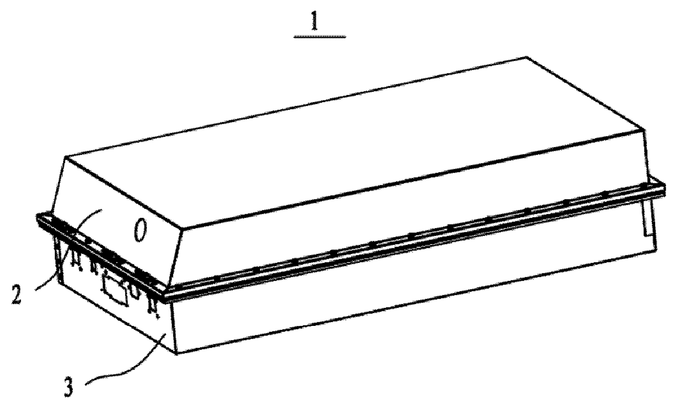


FIG. 4

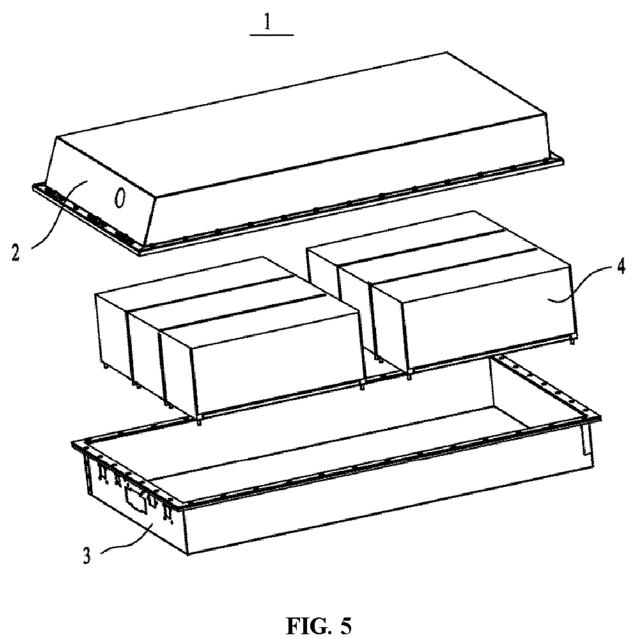


FIG. 5

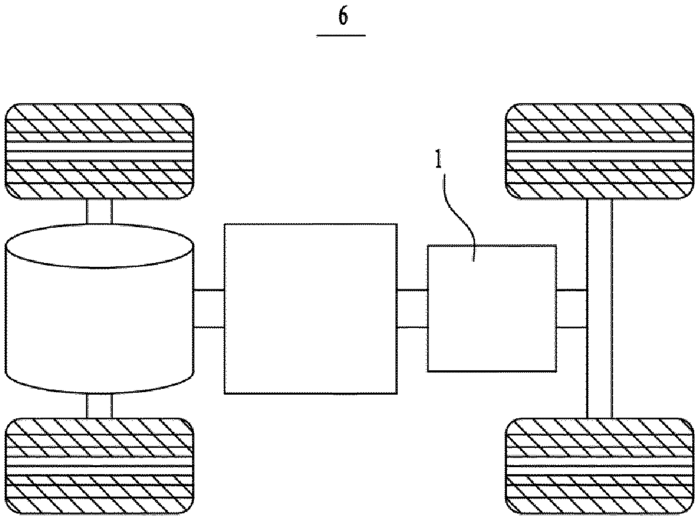


FIG. 6

## INTERNATIONAL SEARCH REPORT

International application No.
**PCT/CN2023/088797**

**A. CLASSIFICATION OF SUBJECT MATTER**

H01M4/62(2006.01)i；H01M50/40(2021.01)i；H01M4/13(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT; CNABS; VEN; WOTXT; USTXT; EPTXT; CNKI: 电池, 电解液, 吸收, 亲液, 氟, 聚合物, battery, electrolyte, absorption, lyophile, fluorine, polymer

**C. DOCUMENTS CONSIDERED TO BE RELEVANT**

| Category* | Citation of document, with indication, where appropriate, of the relevant passages | Relevant to claim No. |
|---|---|---|
| X | CN 113906594 A (HONDA MOTOR CO., LTD.) 07 January 2022 (2022-01-07)<br>description, paragraphs 4 and 44-198 | 1-18 |
| X | CN 115117341 A (RISESUN MGL NEW ENERGY TECHNOLOGY CO., LTD.) 27 September 2022 (2022-09-27)<br>description, paragraphs 2 and 5-73, and figure 1 | 1-18 |
| X | CN 114628773 A (SHENZHEN CAPCHEM TECHNOLOGY CO., LTD.) 14 June 2022 (2022-06-14)<br>description, paragraphs 2 and 5-82 | 1-18 |
| A | JP 2017174740 A (MITSUBISHI CHEMICAL CORP.) 28 September 2017 (2017-09-28)<br>entire document | 1-18 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 January 2024** | **04 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/088797**

| Patent document cited in search report | Publication date (day/month/year) | Patent family member(s) | Publication date (day/month/year) |
|---|---|---|---|
| CN 113906594 A | 07 January 2022 | WO 2020245911 A1 | 10 December 2020 |
| | | US 2022328934 A1 | 13 October 2022 |
| | | JP 7284260 B2 | 30 May 2023 |
| | | JP WO2020245911 A1 | 31 December 2021 |
| CN 115117341 A | 27 September 2022 | None | |
| CN 114628773 A | 14 June 2022 | None | |
| JP 2017174740 A | 28 September 2017 | JP 6728855 B2 | 22 July 2020 |

Form PCT/ISA/210 (patent family annex) (July 2022)